(19) Europäisches Patentamt / European Patent Office / Office européen des brevets

(11) **EP 4 102 271 A1**

(12) **EUROPEAN PATENT APPLICATION**
published in accordance with Art. 153(4) EPC

(43) Date of publication:
**14.12.2022 Bulletin 2022/50**

(21) Application number: **21767957.0**

(22) Date of filing: **01.03.2021**

(51) International Patent Classification (IPC):
**G02B 5/28** $^{(2006.01)}$        **G02B 5/26** $^{(2006.01)}$

(52) Cooperative Patent Classification (CPC):
**G02B 5/26; G02B 5/28**

(86) International application number:
**PCT/JP2021/007754**

(87) International publication number:
**WO 2021/182159 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.03.2020   JP 2020041185**

(71) Applicant: **Tokai Optical Co., Ltd.
Okazaki-shi, Aichi 444-2192 (JP)**

(72) Inventor: **SUGIURA, Muneo
Okazaki-shi, Aichi 444-2192 (JP)**

(74) Representative: **Prüfer & Partner mbB
Patentanwälte · Rechtsanwälte
Sohnckestraße 12
81479 München (DE)**

(54)    **DELAY MIRROR AND DELAY MIRROR SYSTEM**

(57)    [PROBLEM] Provided are a delay mirror and a delay mirror system: that realize a delay optical system in which delay can be made in a coaxial manner without separating the optical path of light to be delayed from the optical path of light having a wavelength different from that of the light to be delayed; that is simple; and of which installation and fine adjustment are easy.

[SOLUTION] A delay mirror 1 includes a base 2, and an optical multilayer film 4 formed on a surface R of the base 2. The value of a group delay GD in a first wavelength band according to the optical multilayer film 4 is different from the value of the group delay GD in the second wavelength band according to the optical multilayer film 4, and the value of a group delay dispersion GDD in the first wavelength band according to the optical multilayer film 4 and the value of the group delay dispersion GDD in the second wavelength band according to the optical multilayer film 4 are each not less than -100 fs$^2$ and not greater than 100 fs$^2$. Further, the delay mirror system includes a delay mirror movement mechanism which moves the delay mirror 1 such that the number of times of reflection is changed.

FIG.1

**Description**

TECHNICAL FIELD

The present invention relates to a delay mirror usable in a delay optical system, and a delay mirror system having the same.

BACKGROUND ART

Recently, a delay optical system having a level of femtoseconds ($10^{-15}$ seconds) has been used. The delay optical system is an optical system for delaying a certain optical pulse with respect to another optical pulse.

For example, in Non-Patent Literature 1 below, in order to observe an $N_2$ molecule Rydberg wave packet, an optical pulse emitted from a Ti: Sapphire laser is divided into light serving as the source of pump light having a wavelength 80 nm band (nanometer band) and probe light having a wavelength 800 nm band, and the probe light is applied to a sample in a state of being delayed at a femtosecond level with respect to the pump light. Slightly changing the delay time is repeated, whereby a fast phenomenon is visualized (pump-probe spectroscopy). This delay is performed by adjusting the optical path length of the probe light with use of four mirrors each inclined by 45° with respect to incident light. That is, these mirrors cause a part of the optical path of the probe light to have a "Π" shape, the second and third mirrors are mounted on a delay stage being a common stage, and the delay stage is moved with respect to the first and fourth mirrors, whereby the length of the optical path is changed, the optical path length of the probe light is adjusted, and the probe light is delayed by a desired time with respect to the pump light.

In Non-Patent Literature 2 below, in order to cause seed light having a wavelength 1600 nm band and pump light having a wavelength 800 nm band to be simultaneously incident on $BiB_3O_6$ crystals, time adjustment is performed on the seed light with respect to the pump light, in a delay optical system using four mirrors as described above.

Further, a delay optical system using a pentagon prism structure described in Patent Literature 1 below is known.

CITATION LIST

[PATENT LITERATURE]

[PTL1] Japanese Laid-Open Patent Publication No. 2008-102352 [NON PATENT LITERATURE]
[NPL 1] Yuto Toida, "Observation of N2 molecule Rydberg wave packet by extreme ultraviolet ultrafast photoelectron spectroscopy", thesis for master's degree, graduate school, Nagoya University, March, 2014
[NPL 2] N. Ishii et al., "Sub-two-cycle, carrier-envelope phase-stable, intense optical pulses at 1.6 $\mu$m from a BiB3O6 optical parametric chirped-pulse amplifier", OPTICS LETTERS, Vol. 37, No. 20, October 15, 2012, p. 4182-4184

SUMMARY OF THE INVENTION

PROBLEMS TO BE SOLVED BY THE INVENTION

In the delay optical system using four mirrors described above, the optical path of light having a wavelength to be delayed and the optical path of light having a wavelength different therefrom need to be separated. Thus, the delay optical system becomes complicated. In addition, in such a delay optical system, fine movement control of the delay stage is required in addition to accurate arrangement of a plurality of mirrors, and thus, installation and fine adjustment are difficult.

In the delay optical system using a pentagon prism structure described above as well, delay is caused by extending the optical path length with use of the pentagon prism structure after all. Therefore, similar to the delay optical system using four mirrors, division is required, and installation and fine adjustment of the pentagon prism structure and the like are difficult.

In addition, in a case of a femtosecond pulse, it is necessary to pay attention to the fact that, when the femtosecond pulse passes through the inside of glass, the pulse width changes due to influence of the refractive index dispersion thereof.

Therefore, a major object of the present invention is to provide a delay mirror that realizes a delay optical system in which delay can be made in a coaxial manner without separating the optical path of light to be delayed from the optical path of light having a wavelength different from that of the light to be delayed.

In addition, another major object of the present invention is to provide a delay mirror that is simple and that realizes a delay optical system of which installation and fine adjustment are easy.

Further, another major object of the present invention is to provide a delay mirror system that has the delay mirror described above and that realizes a delay optical system in which delay time can be adjusted in a simple manner.

SOLUTION TO THE PROBLEMS

In order to achieve the above object, the invention according to claim 1 is a delay mirror including: a base; and an optical multilayer film formed on a surface of the base. A value of a group delay GD in a first wavelength band according to the optical multilayer film is different from a value of the group delay GD in a second wavelength band according to the optical multilayer film.

In the invention according to claim 2 based on the above invention, a value of a group delay dispersion GDD in the first wavelength band according to the optical multilayer film and a value of the group delay dispersion GDD in the second wavelength band according to the optical multilayer film are each not less than -100 fs$^2$ and not greater than 100 fs$^2$.

In the invention according to claim 3 based on the above invention, a value of a group delay dispersion GDD in the first wavelength band according to the optical multilayer film and a value of the group delay dispersion GDD in the second wavelength band according to the optical multilayer film are each a negative value.

In the invention according to claim 4 based on the above invention, the value of the group delay dispersion GDD in the first wavelength band is a value that realizes dispersion compensation of a first optical pulse according to the first wavelength band through a predetermined number of times of reflection, and the value of the group delay dispersion GDD in the second wavelength band is a value that realizes dispersion compensation of a second optical pulse according to the second wavelength band through a predetermined number of times of reflection.

In the invention according to claim 5 based on the above invention, the first optical pulse and the second optical pulse are those having passed through a nonlinear optical crystal.

In the invention according to claim 6 based on the above invention, a value of a group delay dispersion GDD in the first wavelength band according to the optical multilayer film and a value of a group delay dispersion GDD in the second wavelength band according to the optical multilayer film are each a positive value.

In the invention according to claim 7 based on the above invention, out of a value of a group delay dispersion GDD in the first wavelength band according to the optical multilayer film and a value of a group delay dispersion GDD in the second wavelength band according to the optical multilayer film, one is a positive value and another is a negative value.

In the invention according to claim 8 based on the above invention, out of the first wavelength band and the second wavelength band, one is a 400 nm band and another is an 800 nm band.

In the invention according to claim 9 based on the above invention, out of the first wavelength band and the second wavelength band, one is a 515 nm band and another is a 1030 nm band.

In order to achieve the above object, an invention according to claim 10 is a delay mirror system including: the above delay mirror; and a delay mirror movement mechanism configured to move the delay mirror with respect to another mirror such that a number of times of reflection at the delay mirror is changed.

The invention according to claim 11 includes a pair of the delay mirrors.

ADVANTAGEOUS EFFECTS OF THE INVENTION

A major effect of the present invention is that a delay mirror that realizes a delay optical system in which delay can be made in a coaxial manner without separating the optical path of light to be delayed from the optical path of light having a wavelength different from that of the light to be delayed, is provided.

In addition, another major effect of the present invention is that a delay mirror that is simple and that realizes a delay optical system of which installation and fine adjustment are easy, is provided.

Further, another major effect of the present invention is that a delay mirror system that has the delay mirror described above and that realizes a delay optical system in which delay time can be adjusted in a simple manner, is provided.

BRIEF DESCRIPTION OF THE DRAWINGS

[FIG. 1] FIG. 1 is a schematic diagram of a delay mirror according to the present invention.
[FIG. 2] FIG. 2 is a schematic diagram of a delay mirror system according to the present invention.
[FIG. 3] FIG. 3 is a graph showing the physical film thickness of each layer according to Example 1-1 of the present invention.

[FIG. 4] FIG. 4 is a graph showing the physical film thickness of each layer according to Example 1-2 of the present invention.

[FIG. 5] FIG. 5 is a graph showing the spectral reflectance distribution (vertical axis: reflectance [%]) in a wavelength region (horizontal axis: wavelength [nm]) of 300 nm to 900 nm, according to Examples 1-1, 1-2.

[FIG. 6] FIG. 6 is a graph showing the group delay GD (vertical axis, [fs]) in the same wavelength region, according to Examples 1-1, 1-2.

[FIG. 7] FIG. 7 is a graph showing the group delay dispersion GDD (vertical axis, [fs$^2$]) in the same wavelength region, according to Examples 1-1, 1-2.

[FIG. 8] FIG. 8 is a diagram similar to FIG. 4, according to Example 2-1.

[FIG. 9] FIG. 9 is a diagram similar to FIG. 4, according to Example 2-2.

[FIG. 10] FIG. 10 is a diagram similar to FIG. 5, according to Examples 2-1, 2-2.

[FIG. 11] FIG. 11 is a diagram similar to FIG. 6, according to Examples 2-1, 2-2.

[FIG. 12] FIG. 12 is a diagram similar to FIG. 7, according to Examples 2-1, 2-2.

[FIG. 13] FIG. 13 is a diagram similar to FIG. 4, according to Example 3.

[FIG. 14] FIG. 14 is a diagram similar to FIG. 5, according to Example 3.

[FIG. 15] FIG. 15 is a diagram similar to FIG. 6, according to Example 3.

[FIG. 16] FIG. 16 is a diagram similar to FIG. 7, according to Example 3.

[FIG. 17] FIG. 17 is a diagram similar to FIG. 4, according to Example 4.

[FIG. 18] FIG. 18 is a diagram similar to FIG. 5, according to Example 4.

[FIG. 19] FIG. 19 is a diagram similar to FIG. 6, according to Example 4.

[FIG. 20] FIG. 20 is a diagram similar to FIG. 7, according to Example 4.

[FIG. 21] FIG. 21 is a diagram similar to FIG. 4, according to Example 5.

[FIG. 22] FIG. 22 is a diagram similar to FIG. 5, according to Example 5.

[FIG. 23] FIG. 23 is a diagram similar to FIG. 6, according to Example 5.

[FIG. 24] FIG. 24 is a diagram similar to FIG. 7, according to Example 5.

[FIG. 25] FIG. 25 is a diagram similar to FIG. 4, according to Example 6.

[FIG. 26] FIG. 26 is a diagram similar to FIG. 5, according to Example 6.

[FIG. 27] FIG. 27 is a diagram similar to FIG. 6, according to Example 6.

[FIG. 28] FIG. 28 is a diagram similar to FIG. 7, according to Example 6.

[FIG. 29] FIG. 29 is a schematic diagram of a laser system having a pair of the delay mirrors (with dispersion compensation function) of Example 7.

[FIG. 30] FIG. 30 is a diagram similar to FIG. 4, according to Example 7.

[FIG. 31] FIG. 31 is a diagram similar to FIG. 5, according to Example 7.

[FIG. 32] FIG. 32 is a diagram similar to FIG. 6, according to Example 7.

[FIG. 33] FIG. 33 is a diagram similar to FIG. 7, according to Example 7.

[FIG. 34] FIG. 34 is a diagram similar to FIG. 4, according to Example 8.

[FIG. 35] FIG. 35 is a diagram similar to FIG. 5, according to Example 8.

[FIG. 36] FIG. 36 is a diagram similar to FIG. 6, according to Example 8.

[FIG. 37] FIG. 37 is a diagram similar to FIG. 7, according to Example 8.

[FIG. 38] FIG. 38 is a diagram similar to FIG. 4, according to Example 9.

[FIG. 39] FIG. 39 is a diagram similar to FIG. 5, according to Example 9.

[FIG. 40] FIG. 40 is a diagram similar to FIG. 6, according to Example 9.

[FIG. 41] FIG. 41 is a diagram similar to FIG. 7, according to Example 9.

[FIG. 42] FIG. 42 is a diagram similar to FIG. 4, according to Example 10.

[FIG. 43] FIG. 43 is a diagram similar to FIG. 5, according to Example 10.

[FIG. 44] FIG. 44 is a diagram similar to FIG. 6, according to Example 10.

[FIG. 45] FIG. 45 is a diagram similar to FIG. 7, according to Example 10.

[FIG. 46] FIG. 46 is a diagram similar to FIG. 4, according to Example 11.

[FIG. 47] FIG. 47 is a diagram similar to FIG. 5, according to Example 11.

[FIG. 48] FIG. 48 is a diagram similar to FIG. 6, according to Example 11.

[FIG. 49] FIG. 49 is a diagram similar to FIG. 7, according to Example 11.

[FIG. 50] FIG. 50 is a diagram similar to FIG. 4, according to Example 12.

[FIG. 51] FIG. 51 is a diagram similar to FIG. 5, according to Example 12.

[FIG. 52] FIG. 52 is a diagram similar to FIG. 6, according to Example 12.

[FIG. 53] FIG. 53 is a diagram similar to FIG. 7, according to Example 12.

[FIG. 54] FIG. 54 is a diagram similar to FIG. 4, according to Example 13.

[FIG. 55] FIG. 55 is a diagram similar to FIG. 5, according to Example 13.

[FIG. 56] FIG. 56 is a diagram similar to FIG. 6, according to Example 13.
[FIG. 57] FIG. 57 is a diagram similar to FIG. 7, according to Example 13.

DESCRIPTION OF EMBODIMENTS

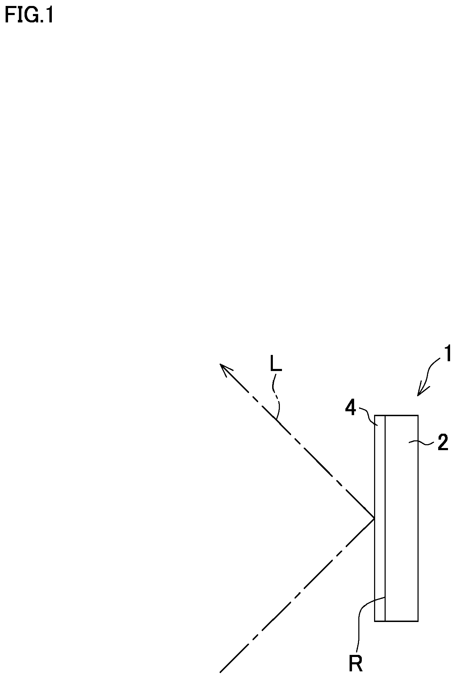

Hereinafter, examples of an embodiment according to the present invention will be described with reference to the drawings as appropriate. It is noted that the embodiment of the present invention is not limited to these examples.
As shown in FIG. 1, a delay mirror 1 according to the present invention has a base 2 and an optical multilayer film 4.
The base 2 includes a surface R on which the optical multilayer film 4 is formed. The delay mirror 1 reflects a plurality of optical pulses having different wavelength bands from each other, at the optical multilayer film 4 coated on the surface R, thereby delaying, with respect to an optical pulse having a predetermined wavelength band, an optical pulse having another wavelength band. These optical pulses can pass along the same optical path L.
The base 2 may have translucency or may not have translucency.
The material of the base 2 is not limited in particular, and is glass, crystals, ceramics, or resin, for example.
The shape of the base 2 is not limited in particular, and is a parallel flat plate shape or a wedged shape, for example.
A group delay GD of the optical multilayer film 4 has a value that is different for each wavelength band.
The group delay GD is defined by a reflection phase $\phi$ of the optical multilayer film 4. After a wave $\cos(\omega_n t)$ having an angular frequency $\omega_n$ and a wave $\cos\{(\omega_n+\Delta\omega)t\}$ having an angular frequency $\omega_n+\Delta\omega$ are reflected at the optical multilayer film 4, the respective waves become $\rho\cos\{\omega_n t+\phi(\omega_n)\}$ and $\rho\cos\{(\omega_n+\Delta\omega)t+\phi(\omega_n+\Delta\omega)\}$, with $\rho$ used as a Fresnel reflection coefficient of the optical multilayer film 4. Here, $\rho$ is a constant, for simplification.
A wave obtained through superposition of these is represented by the following formulae (1a), (1b). That is, the wave obtained through superposition of these is a wave that has an amplitude $E_{n0}(t)$ having been subjected to time modulation. When many waves are superposed according to n=1, 2, 3, etc., modulation becomes sharp, and the superposed wave becomes a pulse train.
When $\Delta\omega/\omega_n \ll 1$, formula (1b) can be deformed into the following formula (2).
[Math. 1]

$$E_n(t) = E_{n0}(t)\cos\left\{\left(\omega_n + \frac{\Delta\omega}{2}\right)t + \frac{\phi(\omega_n) + \phi(\omega_n + \Delta\omega)}{2}\right\} \quad (1a)$$

$$E_{n0}(t) = 2\rho\cos\left\{\frac{\Delta\omega}{2}t - \frac{\phi(\omega_n) - \phi(\omega_n + \Delta\omega)}{2}\right\} \quad (1b)$$

$$E_{n0}(t) \cong 2\rho\cos\left\{\frac{\Delta\omega}{2}\left(t + \left.\frac{\partial\phi}{\partial\omega}\right|_{\omega_n}\right) + \left.\frac{1}{4}\frac{\partial^2\phi}{\partial\omega^2}\right|_{\omega_n}(\Delta\omega)^2 + \cdots\right\} \quad (2)$$

From formula (2), due to reflection at the optical multilayer film 4, a time t becomes $t+\partial\phi/\partial\omega|_{\omega_n}$, and thus, there is an effect of providing time delay to a pulse or modulation. The wavelength of a standing wave that occurs in a laser resonator that emits an optical pulse has discrete values, and thus, $\omega_n$ takes discrete values. However, since $\Delta\omega$ is a minute amount, $\omega_n$ is considered to be a continuous variable. Then, the group delay GD is defined as follows.

$$GD = -\partial\phi/\partial\omega \quad (3)$$

The group delay GD is a value according to the stay time in the optical multilayer film 4. Therefore, when the group delay GD is different for each wavelength band, an optical pulse, with respect to an optical pulse belonging to a certain wavelength band, that belongs to another wavelength band will be delayed by the difference of the stay time. The greater the group delay GD is, the longer the stay time in the optical multilayer film 4, and in accordance with the difference in the group delay GD, an optical pulse having a wavelength band for which the group delay GD is greater is delayed with respect to an optical pulse having a wavelength band for which the group delay GD is smaller. Thus, the delay mirror 1 is composed of the optical multilayer film 4 having a different group delay GD for each wavelength band.

Alternatively, the difference in the group delay GD may be grasped in terms of the wavelength belonging to each wavelength band. That is, when the group delay GD in a first wavelength band and the group delay GD in a second wavelength band are caused to be different from each other, a delay based on the difference in the stay time is provided.

It is noted that the group delay GD may be further caused to be different in a third wavelength band, in addition to the first wavelength band and the second wavelength band described above, that has a wavelength different from these. Similarly, a fourth wavelength band or a wavelength band at a higher ordinal number may be further set so as to have a group delay GD that is different from each other.

Meanwhile, in $\partial^2\phi/\partial\omega^2|_{\omega n}$ being the lowest order term of non-linear terms of co, $\omega=\omega_n$ is substituted as $\phi$, and $\partial^2\phi/\partial\omega^2|_{\omega n}$ corresponds to a group delay dispersion GDD. When the group delay is shifted (when there is dispersion), wave packets having various wavelengths forming an optical pulse are respectively shifted, whereby the shape of the optical pulse is changed.

That is, the group delay dispersion GDD is represented as follows.

$$GDD = -\partial^2\phi/\partial\omega^2 \quad (4)$$

When the shapes of a preceding optical pulse and an optical pulse to be delayed are not to be changed, the group delay dispersion GDD is 0 or is close to 0 in the wavelength band of each optical pulse (provision of a low dispersion mirror function). As described later, in a case where the pulse width is not less than about 40 fs, if the group delay dispersion GDD is within a range of not less than -100 fs$^2$ and not greater than 100 fs$^2$, deformation of the optical pulse is little when compared with that in other cases, and it can be considered that there is substantially no deformation of the optical pulse or influence thereof. With respect to a pulse that has a narrower pulse width, the value of the GDD needs to be smaller. It is noted that the lower limit of the range can be set to any of -80, -60, -40, -20, 0, 20, 40, 60, 80, or the like, and the upper limit of the range can be set to any of 80, 60, 40, 20, 0, -20, -40, -60, -80, or the like.

Alternatively, when optical pulse deformation is to be performed in order to perform dispersion compensation, etc., as well as delaying, the group delay dispersion GDD is caused to have a value according to the deformation, in the wavelength band of each optical pulse (provision of another function by deformation).

The optical multilayer film 4 is an inorganic multilayer film using a dielectric material or a semiconductor material, and is a dielectric multilayer film or a semiconductor multilayer film.

The optical multilayer film 4 is formed on a part or the entirety of at least one surface of the base 2.

The optical multilayer film 4 includes a low-refractive index layer and a high-refractive index layer. In addition, the optical multilayer film 4 can further include a middle-refractive index layer.

The design of the optical multilayer film 4 is changed through change of design elements such as selection of the number and materials of layers of the high-refractive index layer and the low-refractive index layer (and the middle-refractive index layer), and increase/decrease of the thickness (physical film thickness or optical film thickness of the layer) of each layer.

For example, through replacement or the like of the middle-refractive index layer by a combination of a high-refractive index layer and a low-refractive index layer that are optically equivalent thereto, the structure of a part or the entirety of the optical multilayer film 4 may be replaced by another structure that is optically equivalent.

The high-refractive index layer is formed from a high-refractive index material such as, for example, zirconium oxide ($ZrO_2$), titanium oxide ($TiO_2$), tantalum oxide ($Ta_2O_5$), niobium oxide ($Nb_2O_5$), hafnium oxide ($HfO_2$), lanthanum oxide ($La_2O_3$), silicon (Si), or praseodymium oxide ($Pr_2O_3$), or a mixture of two or more types of these.

Further, the low-refractive index layer is formed from a low-refractive index material such as, for example, silicon oxide ($SiO_2$), aluminum oxide ($Al_2O_3$), calcium fluoride ($CaF_2$), magnesium fluoride ($MgF_2$), a combination ($Al_2O_3$-$Pr_2O_3$) of aluminum oxide and praseodymium oxide, a combination ($Al_2O_3$-$La_2O_3$) of aluminum oxide and lanthanum oxide, or a combination ($Al_2O_3$-$Ta_2O_5$) of aluminum oxide and tantalum oxide, or a mixture of two or more types of these.

The middle-refractive index layer is formed from a middle-refractive index material such as, for example, $Al_2O_3$, $Pr_2O_3$, $La_2O_3$, $Al_2O_3$-$Pr_2O_3$, or $Al_2O_3$-$La_2O_3$.

It is noted that, for example, two materials are selected from the high-refractive index materials described above, whereby the optical multilayer film 4 may be formed. Further, a film having another function, such as an antifouling film, may be combined on the outside or in the inside of the optical multilayer film 4.

The low-refractive index layer and the high-refractive index layer (and the middle-refractive index layer) of the optical multilayer film 4 are formed by a vacuum deposition method, an ion assisted deposition method, an ion plating method, a sputtering method, or the like.

The optical multilayer film 4 may be formed on a plurality of surfaces of the base 2. For example, the optical multilayer film 4 may be formed on both of obverse and reverse surfaces of the base 2 having a parallel flat plate shape, a wedged shape, a concave shape, or a convex shape.

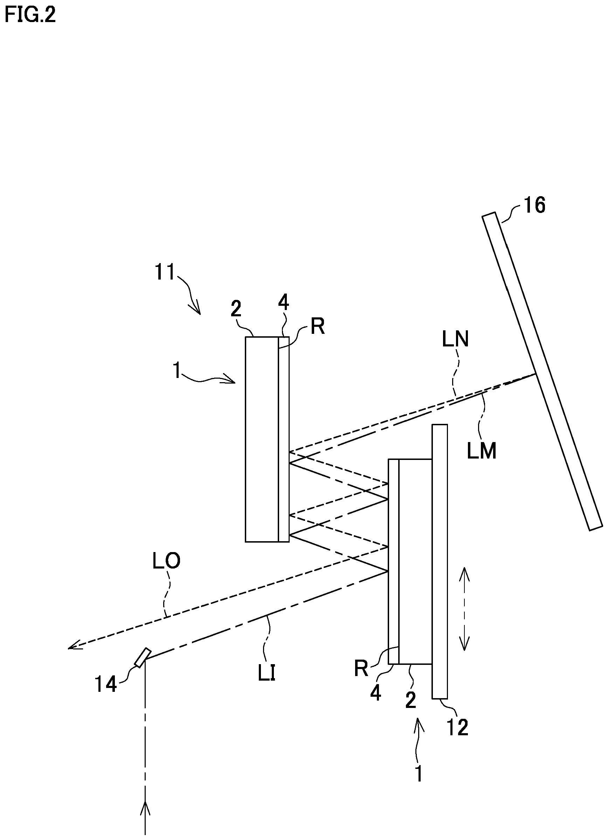

Further, as shown in FIG. 2, a delay mirror system 11 is formed so as to include one or more delay mirrors 1, and a movement mechanism 12 serving as a delay mirror movement mechanism which moves at least one delay mirror 1 with respect to another delay mirror 1.

The delay mirror system 11 has the following configuration so as to prevent movement of an outgoing optical path LO of an outgoing optical pulse. It is noted that up, down, left, and right in the delay mirror system 11 are the same as up, down, left, and right in FIG. 2 for convenience of description. However, in actuality, up, down, left, and right are not limited thereto.

That is, in the delay mirror system 11, two delay mirrors 1 are disposed in a state where the two delay mirrors 1 are parallel with each other and parts of the surfaces R face each other. These delay mirrors 1 are shifted from each other in the up-down direction, and the right delay mirror 1 is positioned below the left delay mirror 1.

The right delay mirror 1 has the movement mechanism 12 coupled thereto. The movement mechanism 12 has a stage on which the delay mirror is mounted, and a drive unit which moves the stage up and down. The right delay mirror 1 is moved, by the movement mechanism 12, in the up-down direction while the parallel state with respect to the left delay mirror 1 is maintained.

To the left below the left delay mirror 1, an incoming-side mirror 14 which leads an incoming optical pulse (incoming optical path LI) to the right delay mirror 1 is disposed.

To the right above the right delay mirror 1, an end mirror 16 which returns the optical pulse (intermediate incoming optical path LM) that has once advanced from the left delay mirror 1 rightward, to the left delay mirror 1, is disposed. The end mirror 16 is inclined such that, with respect to the intermediate incoming optical path LM, an intermediate outgoing optical path LN which is reflection thereof does not completely overlap the intermediate incoming optical path LM.

In the delay mirror system 11, in the state in FIG. 2, the left and right delay mirrors 1 cause a total of eight times of reflection, i.e., four times before the intermediate incoming and four times after the intermediate outgoing. Therefore, a delay eight-fold longer than a delay caused by a single time of reflection at the delay mirror 1 is obtained in the outgoing optical path LO. For example, when a delay of 40 fs (femtoseconds) is caused by a single time of reflection, a delay of 320 fs is obtained by eight times of reflection.

Further, when, from the state in FIG. 2, the right delay mirror 1 is raised by the movement mechanism 12 such that ten times of reflection is obtained instead of eight times before the raise, a delay (e.g., 400 fs) 10-fold longer than a delay caused by a single time of reflection is obtained.

On the other hand, when, from the state in FIG. 2, the right delay mirror 1 is lowered by the movement mechanism 12 such that six times of reflection is obtained instead of eight times before the lowering, a delay (e.g., 240 fs) 6-fold longer than a delay caused by a single time of reflection is obtained.

In a manner similar to these, when the number of times of reflection at the left and right delay mirrors 1 is changed in accordance with a movement amount of the right delay mirror 1, the delay time can be increased/decreased in a simple manner.

As conventionally performed, when optical paths are separated for each wavelength, and one optical path is made longer than the other optical path, the optical path needs to be increased by 119.9 $\mu$m in order to provide a time difference of 400 fs, for example.

In contrast to this, in the delay mirror system 11, in order to provide a time difference of 400 fs, it is sufficient that a total of ten times of reflection are caused at the delay mirrors 1, at each of which a delay of 40 fs is caused by a single time of reflection.

Further, conventionally, in order to adjust the magnitude of the time difference, the length of one optical path needs to be precisely controlled so as to correspond to a desired time difference, and if the length is wrong, an error of the time difference is directly caused.

In contrast to this, in the delay mirror system 11, control of the movement mechanism 12 only needs to be performed to an extent that change in the number of times of reflection can be ensured. Although the time difference is adjusted based on selection from among multiples of natural numbers of the time difference at a single time of reflection, and thus, becomes discrete to some extent, the magnitude of the time difference can be adjusted more easily and accurately.

It is noted that the delay mirror system 11 has modifications as follows.

That is, the delay mirror 1 may be provided while being combined with a low dispersion mirror or the like such that a plurality of times of reflection are caused by a single delay mirror 1. Alternatively, three or more delay mirrors 1 may be provided. The plurality of delay mirrors may be configured such that a delay time per reflection at some of the plurality of delay mirrors is different from the delay time of another delay mirror.

A plurality of delay mirrors 1 that can be moved by the movement mechanism 12 may be provided. Movement by the movement mechanism 12 may include rotational movement. At least one of the incoming-side mirror 14 and the end mirror 16 may be movable.

The end mirror 16 may be omitted, and the intermediate incoming optical path LM in FIG. 2 may serve as the outgoing optical path.

[Examples]

Next, Examples according to the above embodiment of the present invention are shown.

However, Examples do not limit the scope of the present invention. In particular, although the center wavelengths (first center wavelength and second center wavelength) of Examples are a 400 nm band and an 800 nm band, or a 515 nm band and a 1030 nm band, various center wavelengths in the present invention are not limited thereto. The center wavelength is a wavelength at a center in terms of design in a predetermined wavelength region (wavelength band). The 400 nm band is a region that includes 400 nm, and this applies in a similar manner to a band other than the 400 nm band. Such a region (wavelength band in the case of wavelength) is used in order to indicate that the wavelength of a wave packet included in an optical pulse has a width, that the center wavelength is not limited to a single value, and the like. For example, that the center wavelength is a 400 nm band means that the center wavelength is not limited to 400 nm and may be a wavelength around 400 nm.

In addition, depending on interpretation of the present invention, an Example may become a substantial Comparative Example that is outside the scope of the present invention, or a Comparative Example may become a substantial Example that is in the scope of the present invention.

As Examples of the present invention, formation of delay mirrors 1 that respectively have, on one surface (the surface R) of the base 2 having the same plate shape, optical multilayer films 4 that have different film configurations from each other was simulated.

The base 2 has a circular plate shape having a diameter of 30 mm (millimeters), and is made of optical glass BK7.

It is noted that, in each Example, the optical multilayer film 4 on the surface R is a dielectric multilayer film, and can be actually formed through vacuum deposition by causing film substances to be alternately vapor-deposited in a state where each film thickness is controlled.

[Examples 1-1, 1-2]

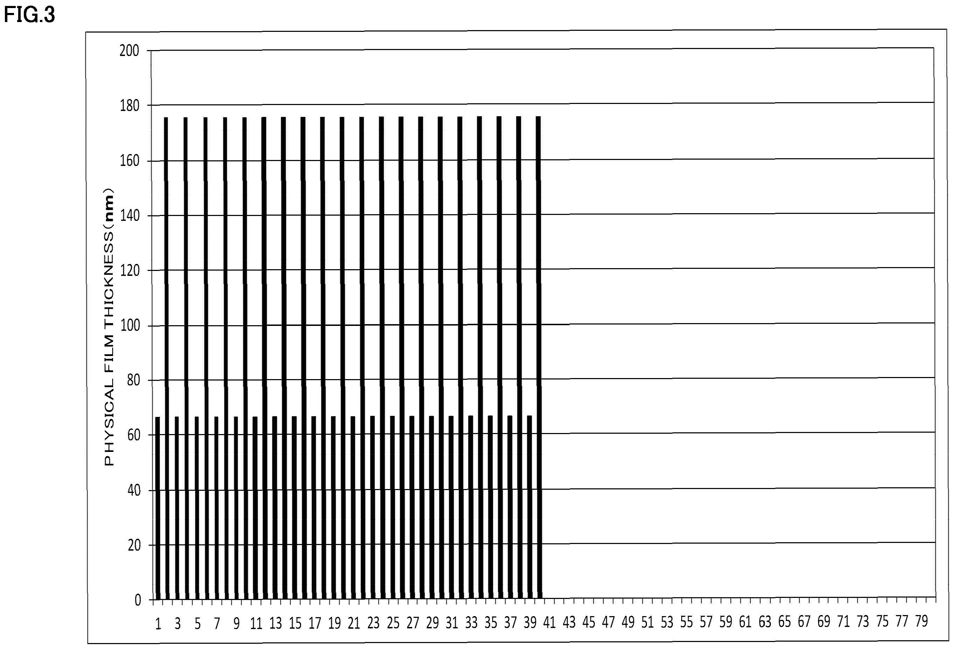

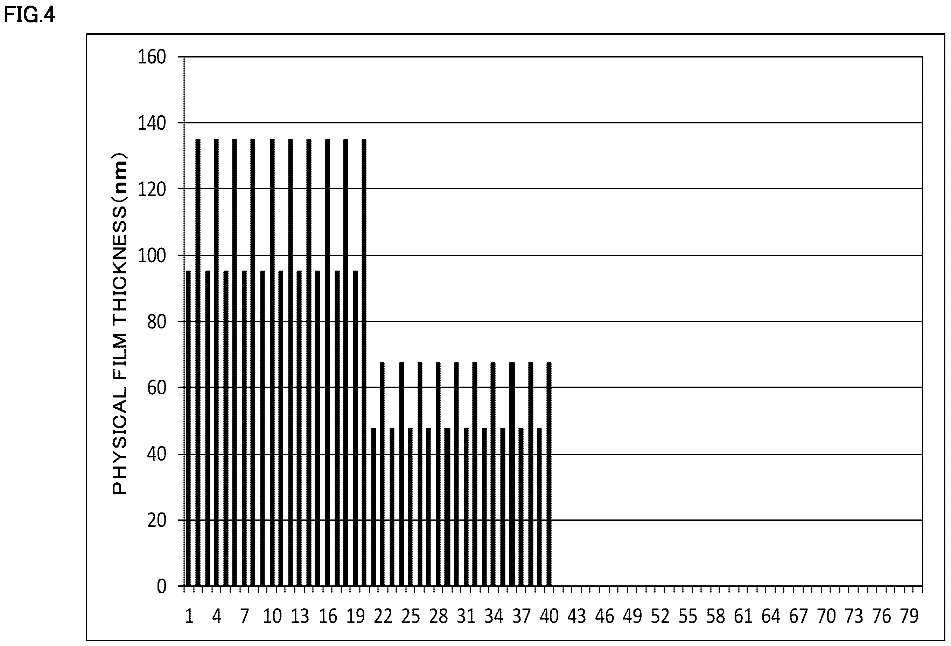

The optical multilayer film 4 of Examples 1-1, 1-2 is an alternate film in which, when the layer closest to the base 2 is defined as a first layer, odd number layers are $Ta_2O_5$ (high-refractive index layer by high-refractive index material) and even number layers are $SiO_2$ (low-refractive index layer by low-refractive index material). Each layer has a physical film thickness as shown in FIG. 3 (Example 1-1) or FIG. 4 (Example 1-2). The total number of layers of the optical multilayer film 4 in each of Examples 1-1, 1-2 is 40.

Examples 1-1, 1-2 are each designed such that the center wavelengths are 400 nm and 800 nm.

The configuration of the optical multilayer film 4 in Examples 1-1, 1-2 can be represented by signs described below. That is, p times of repetition of the configuration in () is represented by $()^p$. A high-refractive index layer of which the optical film thickness at perpendicular incidence is $\lambda_0/4$ is represented by H. A low-refractive index layer of which the optical film thickness at perpendicular incidence is $\lambda_0/4$ is represented by L. When a coefficient (multiplier) of $\lambda_0/4$ is indicated immediately before H and L, the configuration of the optical multilayer film 4 in Example 1-1 is represented by base $2|(0.7H\ 1.3L)^{20}|air$, and the configuration of the optical multilayer film 4 in Example 1-2 is represented by base $2|(1H\ 1L)^{10}(0.5H\ 0.5L)^{10}|air$. It is noted that, in actuality, the optical multilayer film 4 may be subjected to fine adjustment such that, for example, with respect to the configuration represented by the signs, one or more predetermined optical film thicknesses are increased/decreased. That is, such signs may represent a basic design of the optical multilayer film 4.

The optical multilayer film 4 of Example 1-1 can be considered to be in imbalance such that, with respect to $(1H\ 1L)^{20}$, the optical film thickness of each high-refractive index layer is decreased ($\times0.7$) and the optical film thickness of each low-refractive index layer is increased ($\times1.3$).

The optical multilayer film 4 of Example 1-2 has a base-side lamination layer part (first lamination layer part) being $(1H\ 1L)^{10}$, and an air-side lamination layer part (second lamination layer part) being $(0.5H\ 0.5L)^{10}$. The first lamination layer part serves as a mirror for light in an 800 nm band, and the second lamination layer part serves as a mirror for light in a 400 nm band.

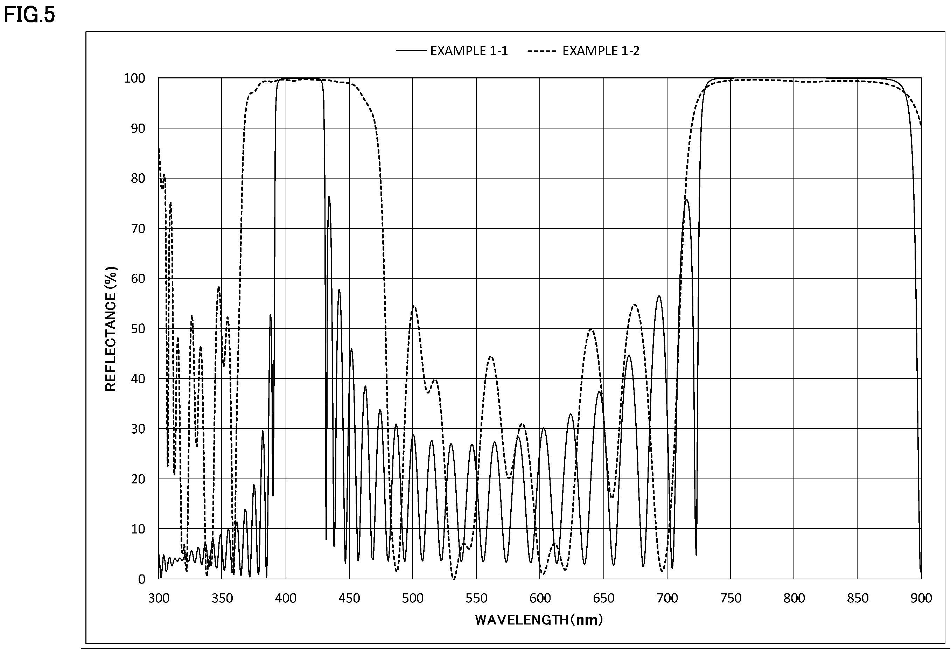

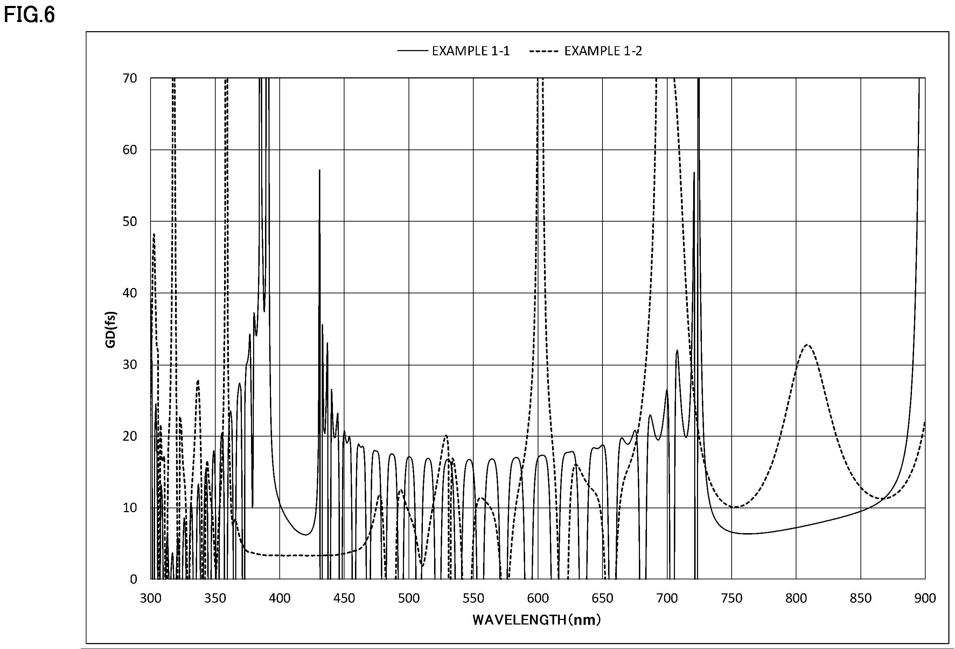

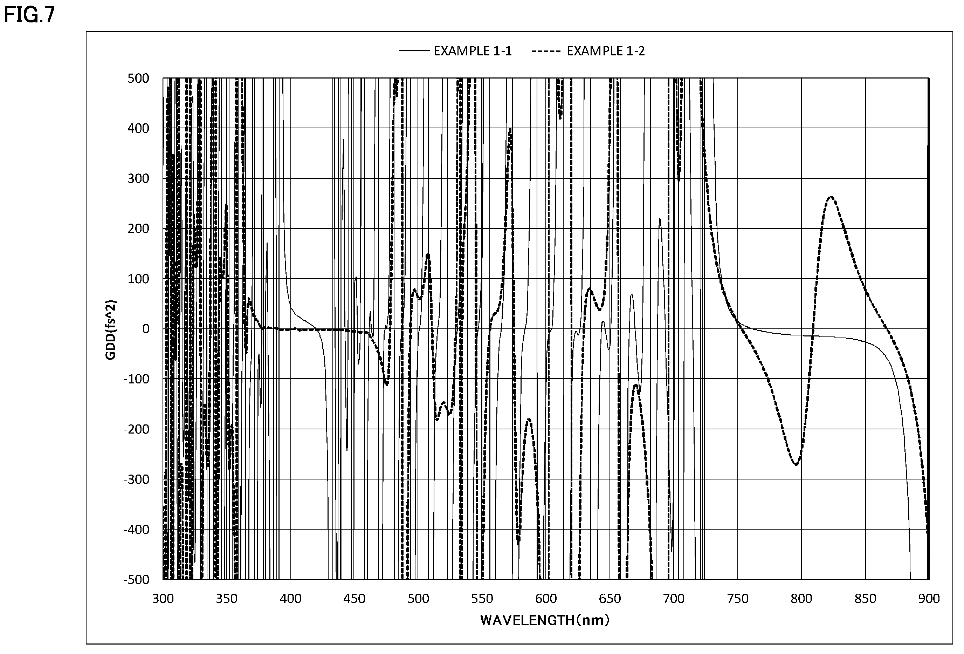

FIG. 5 is a graph showing the spectral reflectance distribution (vertical axis: reflectance [%]) in a wavelength region (horizontal axis: wavelength [nm]) of not less than 300 nm and not greater than 900 nm, according to Examples 1-1, 1-2. FIG. 6 is a graph showing the group delay GD (vertical axis, [fs]) in the same wavelength region, according to Examples 1-1, 1-2. FIG. 7 is a graph showing the group delay dispersion GDD (vertical axis, [fs²]) in the same wavelength region, according to Examples 1-1, 1-2. It is noted that FIG. 5 to FIG. 7 are those obtained at an incidence angle of 5°.

Example 1-1 exhibits high reflection in which the reflectance is about 100% in a wavelength region (400 nm band) of not less than 390 nm and not greater than 430 nm including a wavelength of 400 nm, and exhibits high reflection in a wavelength region (800 nm band) of not less than 730 nm and not greater than 890 nm including a wavelength of 800 nm.

Example 1-2 exhibits high reflection in a wavelength region (400 nm band) of not less than 375 nm and not greater than 450 nm, and in a wavelength region (800 nm band) of not less than 730 nm and not greater than 890 nm.

In Example 1-1, while the group delay GD is 10 fs at the wavelength of 400 nm, the group delay GD is 7 fs at the wavelength of 800 nm. The stay time in the optical multilayer film 4 of an 800 nm band optical pulse becomes longer than the stay time of a 400 nm band optical pulse, and the 800 nm band optical pulse is delayed with respect to the 400 nm band optical pulse. It is noted that if the group delays GD are the same value at the wavelengths of 400 nm and 800 nm, the stay times at the optical multilayer film 4 are the same between the 800 nm band optical pulse and the 400 nm band optical pulse, and there is no time difference between the 800 nm band optical pulse and the 400 nm band optical pulse even if there are reflections at the optical multilayer film 4. Therefore, this assumption example is a Comparative Example that does not belong to the present invention.

In Example 1-2, while the group delay GD is 4 fs at the wavelength of 400 nm, the group delay GD is 30 fs at the wavelength of 800 nm. The stay time in the optical multilayer film 4 of an 800 nm band optical pulse becomes longer than the stay time of a 400 nm band optical pulse, and the 800 nm band optical pulse is delayed with respect to the 400 nm band optical pulse. The magnitude of delay (the difference between the group delay GD of the 800 nm band optical pulse and the group delay GD of the 400 nm band optical pulse, i.e., 30-4=26 fs) in Example 1-2 is greater than that (3 fs) in Example 1-1.

In Example 1-1, the group delay dispersion GDD is about 0 $fs^2$ at the wavelengths 400 nm and 800 nm, and the shapes of both of the 400 nm band optical pulse and the 800 nm band optical pulse are not changed. Since Example 1-1 has a high reflectance at the center wavelength thereof, a relatively small difference (3 fs) in the group delay GD, and the aspect of the group delay dispersion GDD being about 0 $fs^2$, it can be said that Example 1-1 corresponds to a delay mirror 1 that is similar to a two-wavelength standard mirror of which the center wavelengths are 400 nm and 800 nm.

In Example 1-2, although the group delay dispersion GDD is about 0 $fs^2$ at the wavelength of 400 nm, the group delay dispersion GDD is about -250 $fs^2$ and is not 0 $fs^2$ at the wavelength of 800 nm, and although the 400 nm band optical pulse is not deformed, the 800 nm band optical pulse is slightly deformed.

In Examples 1-1, 1-2, with respect to the 400 nm band optical pulse and the 800 nm band optical pulse, a time difference can be provided in a coaxial manner through reflection along the same optical path.

In the above description regarding Examples 1-1, 1-2, in order to clarify the relationship between the group delay GD and the delay of a pulse, the group delays GD at the wavelengths 400 nm and 800 nm were used. Therefore, in the above description, although the wording of the 400 nm band optical pulse and the 800 nm band optical pulse are used, such pulses are those composed only of light at wavelengths that are very close to the wavelengths of 400 nm and 800 nm. With respect to delay, etc., of an optical pulse (having a broader wavelength band) composed of light in a broader wavelength region, it is necessary to focus on the group delay GD and the group delay dispersion GDD in the 400 nm band and the 800 nm band.

Through simulation of Examples 1-1, 1-2 and the like, or other examples, the following was found. That is, as long as the group delay dispersion GDD is within a range of not less than -100 $fs^2$ and not greater than 100 $fs^2$, with respect to an optical pulse having a pulse width of not less than 40 fs, deformation is little when compared with that in other cases, and it can be considered that there is substantially no deformation of the optical pulse or influence thereof. When the pulse width is narrower, a group delay dispersion GDD of which the absolute value is smaller is required. It is noted that the lower limit of the range can be any of - 80, -60, -40, -20, 0, 20, 40, 60, 80, or the like, and the upper limit of the range can be any of 80, 60, 40, 20, 0, -20, -40, -60, -80, or the like.

[Examples 2-1, 2-2]

Examples 2-1, 2-2 are obtained by expanding each wavelength band while maintaining each center wavelength in Example 1-2.

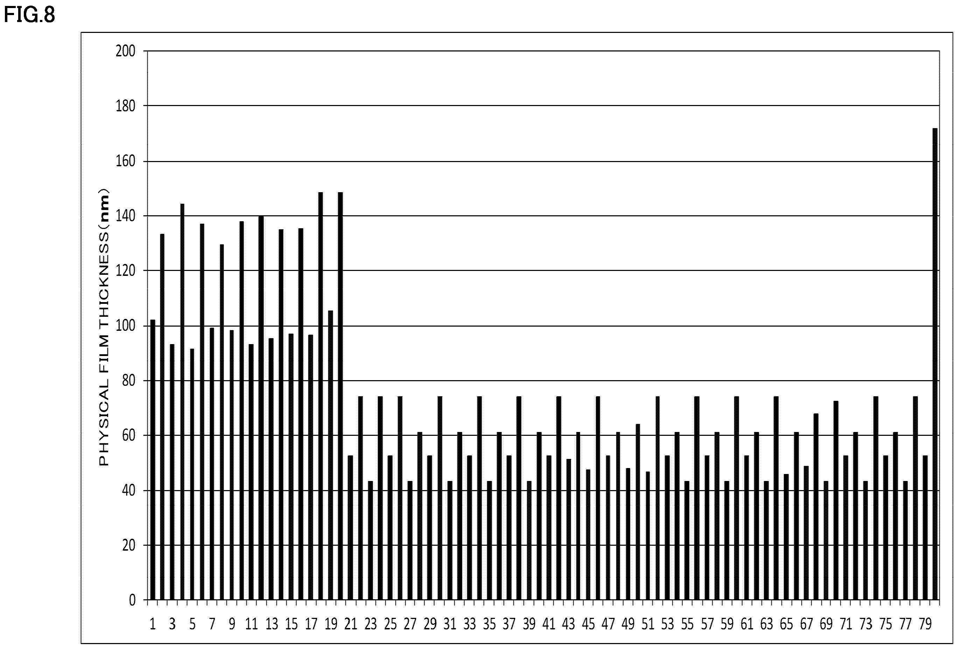

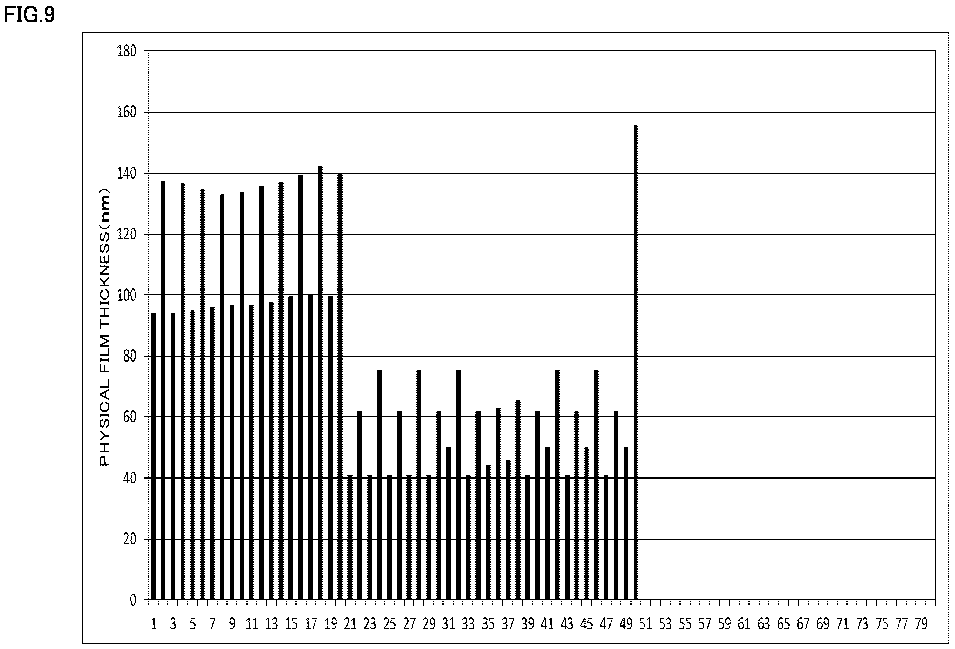

FIG. 8 is a diagram similar to FIG. 4, according to Example 2-1. FIG. 9 is a diagram similar to FIG. 4, according to Example 2-2.

The optical multilayer film 4 of each of Examples 2-1, 2-2 is an alternate film in which odd number layers are $Ta_2O_5$ and even number layers are $SiO_2$, as in other Examples.

Example 2-1 is formed such that: the number of layers in the second lamination layer part of Example 1-2 is increased; Example 2-1 has base $2|(1H\ 1L)^{10}(0.5H\ 0.5L)^{30}0.7L|$air as the basic design; and further, the physical film thickness of each layer is optimized. At the layer closest to the air side, 0.5+0.7=1.2L, and the total number of layers of the optical multilayer film 4 of Example 2-1 is $10\times2+30\times2=80$.

Example 2-2 is formed so as to be the same as Example 2-1 except for the increased number of layers in the second lamination layer part, and such that: Example 2-2 has base $2|(1H\ 1L)^{10}(0.5H\ 0.5L)^{15}0.7L|$air as the basic design; and further, the physical film thickness of each layer is optimized. The total number of layers of the optical multilayer film 4 of Example 2-2 is 50.

Examples 2-1, 2-2 can be considered to have, in the second lamination layer part, an excessive number of layers compared with that necessary for ensuring reflectance.

The optical film thickness of the second lamination layer part of Example 2-1 is 6187.8 nm. The one-way time when an optical pulse passes through the second lamination layer part is 6187.8[nm]/299.79[nm/fs]=20.6[fs].

The optical film thickness of the second lamination layer part of Example 2-2 is 3001.1 nm. The one-way time when an optical pulse passes through the second lamination layer part is 3001.1[nm]/299.79[nm/ fs]=10.0[fs].

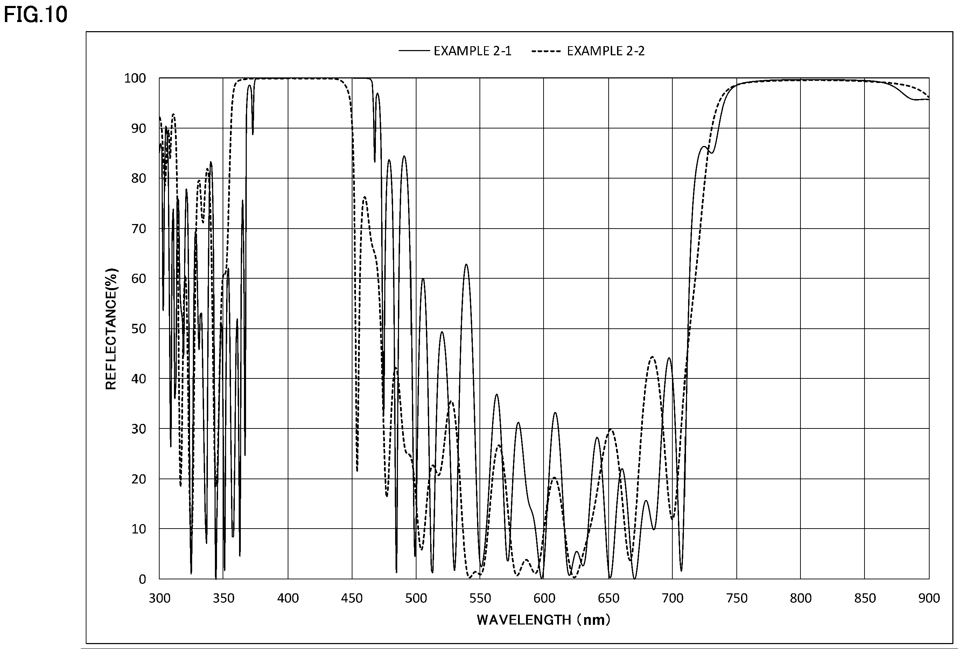

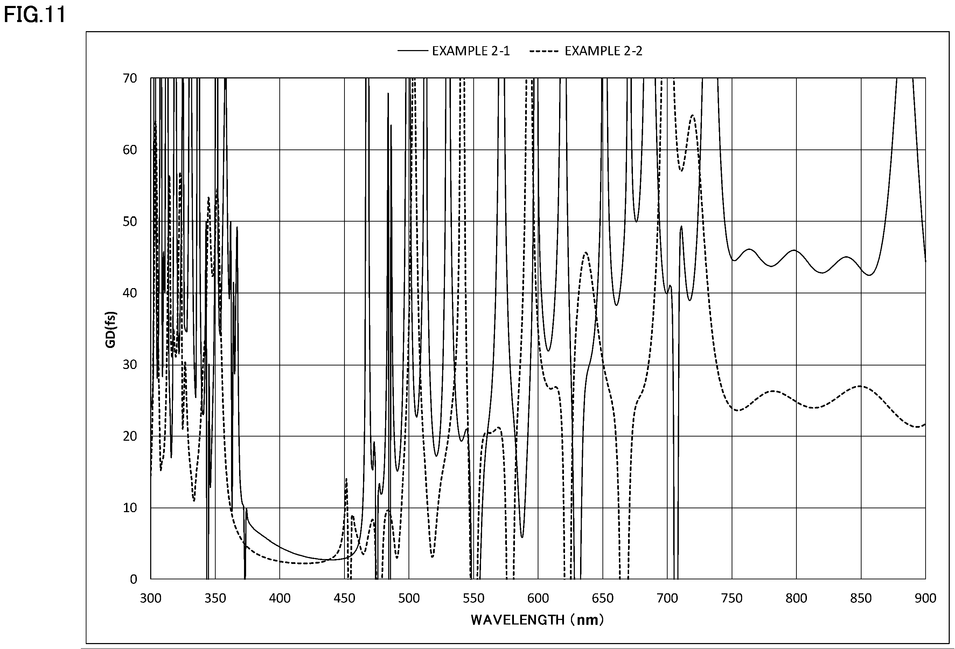

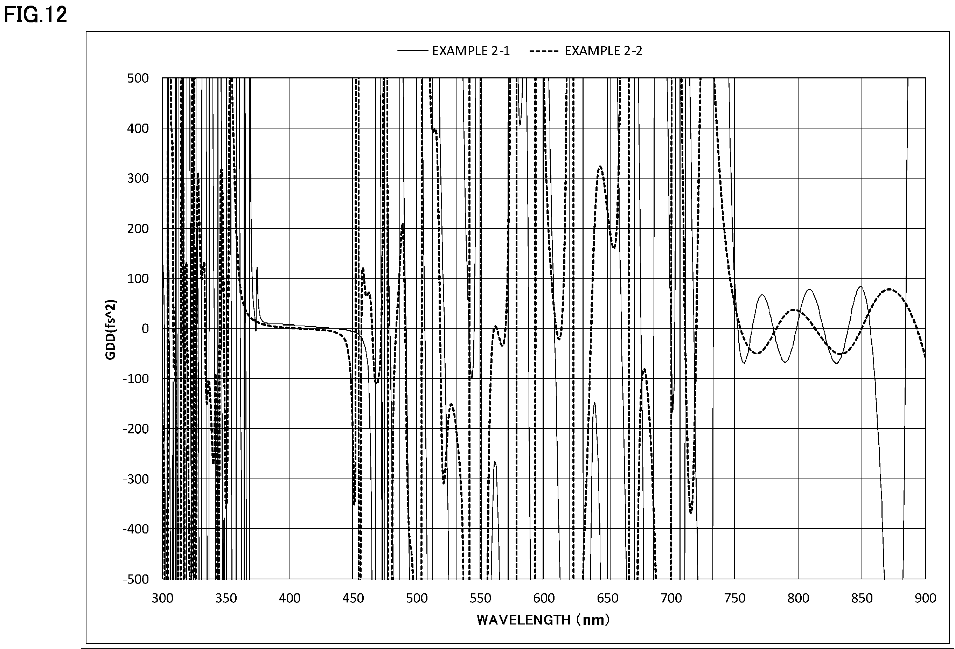

FIG. 10 to FIG. 12 are diagrams similar to FIG. 5 to FIG. 7, according to Examples 2-1, 2-2. FIG. 10 to FIG. 12 are those obtained at an incidence angle of 5°.

Example 2-1 exhibits high reflection in a wavelength region (400 nm band) of not less than 375 nm and not greater than 475 nm, and in a wavelength region (800 nm band) of not less than 750 nm and not greater than 860 nm.

Example 2-2 exhibits high reflection in a wavelength region (400 nm band) of not less than 360 nm and not greater than 440 nm, and in a wavelength region (800 nm band) of not less than 750 nm and not greater than 880 nm.

In Example 2-1, while the group delay GD is about 5 fs in the 400 nm band, the group delay GD is about 45 fs in the 800 nm band, and the difference of the latter relative to the former is about 40 fs. This 40 fs corresponds to about 2-fold of the one-way time regarding the second lamination layer part described above. This is because: a 400 nm band optical pulse round-trips, in the course of reflection, through a part of layers (the portion that functions as a reflection film for the 400 nm band optical pulse) on the air side of the second lamination layer part, whereas an 800 nm band optical pulse round-trips, in the course of reflection, through the entirety of the second lamination layer part and the first lamination layer part (a reflection film for the 800 nm band optical pulse).

In Example 2-2, while the group delay GD is about 4 fs in the 400 nm band, the group delay GD is about 24 fs in the 800 nm band, and the difference of the latter relative to the former is about 20 fs. This 20 fs corresponds to about 2-fold of the one-way time regarding the second lamination layer part described above.

In each of Examples 2-1, 2-2, the group delay dispersions GDD are about 0 $fs^2$ in the wavelength 400 nm band and the wavelength 800 nm band, and the shapes of both of the 400 nm band optical pulse and the 800 nm band optical pulse are not changed. It is noted that the group delay dispersion GDD only needs to be sufficiently smaller than a maximum value or a local maximum value in the wavelength region between the first center wavelength and the second center wavelength, and for example, only needs to be not greater than 1% or not greater than 0.1% of the maximum value or the local maximum value. This also applies hereafter.

Examples 2-1 and 2-2 respectively serve as low-dispersion delay mirrors 1 that delay, through a single time of reflection of each optical pulse and without deforming the optical pulse, an 800 nm band optical pulse with respect to a 400 nm band optical pulse by about 40 fs and about 20 fs. In Examples 2-1, 2-2, with respect to the 400 nm band optical pulse and the 800 nm band optical pulse, a time difference can be provided in a coaxial manner through reflection along the same optical path.

[Example 3]

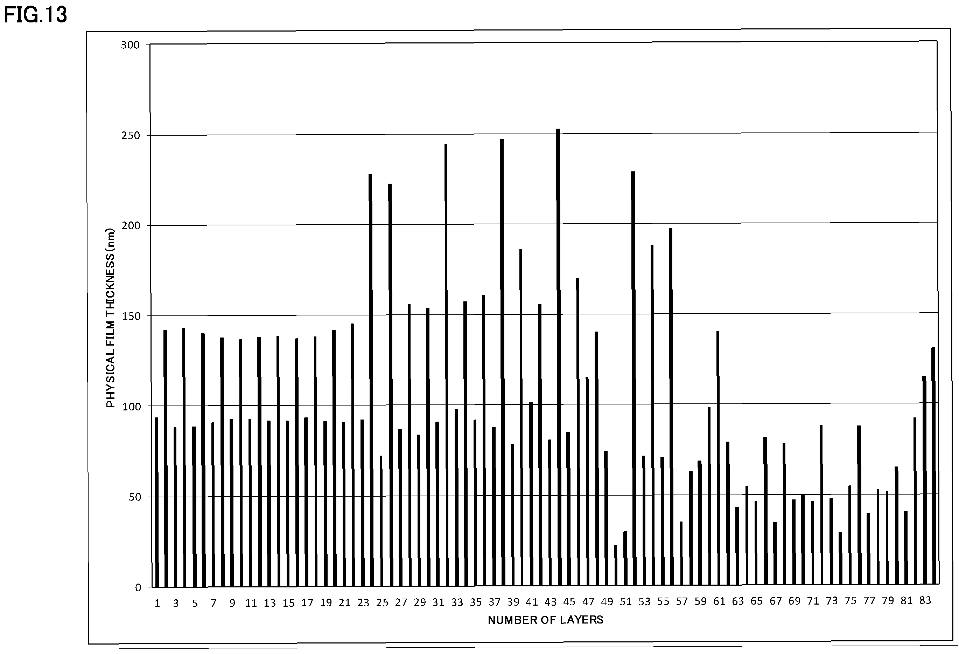

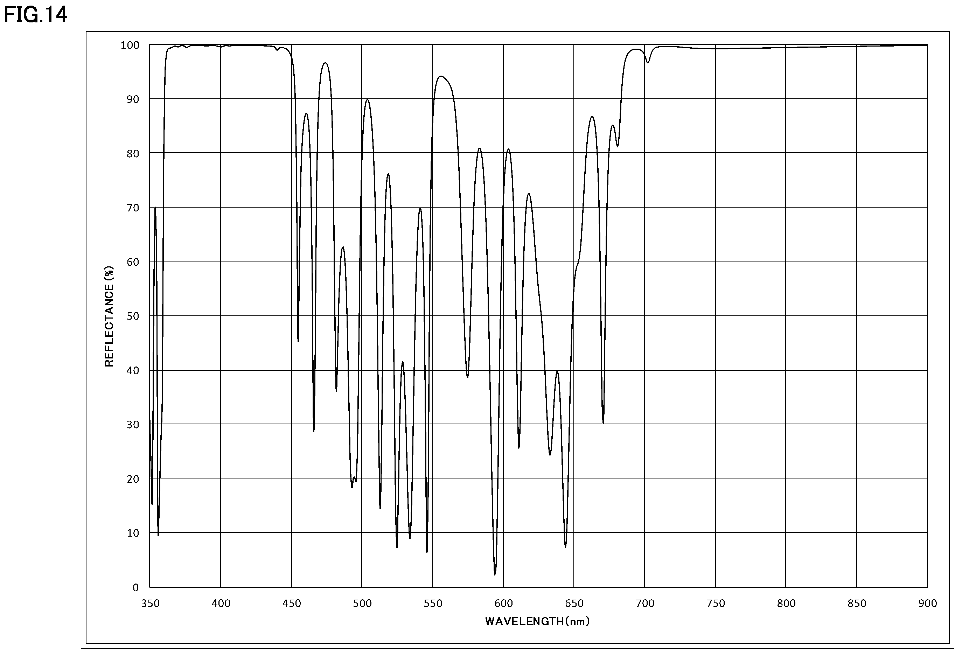

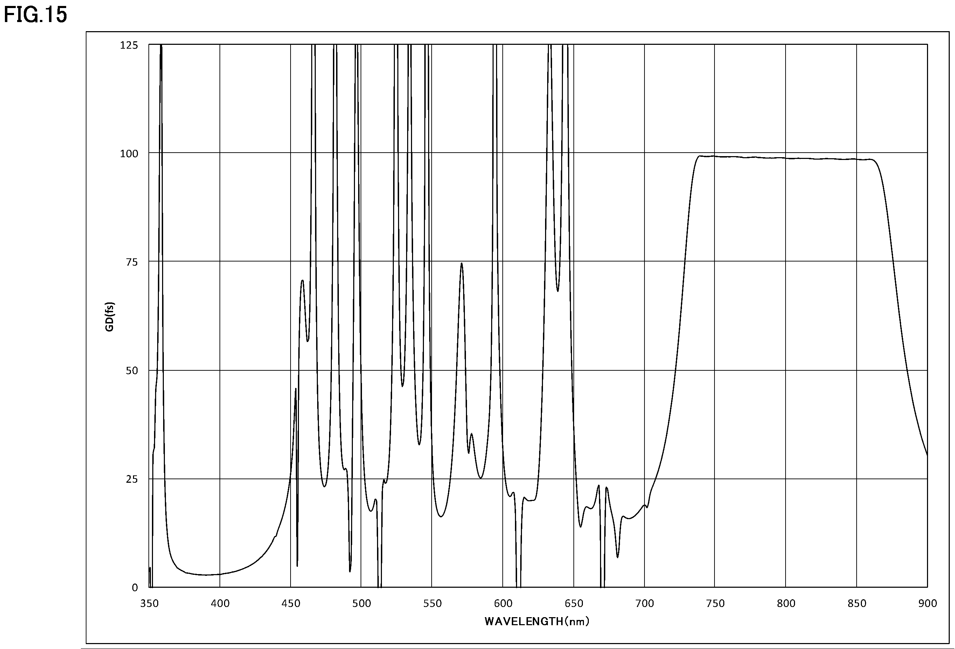

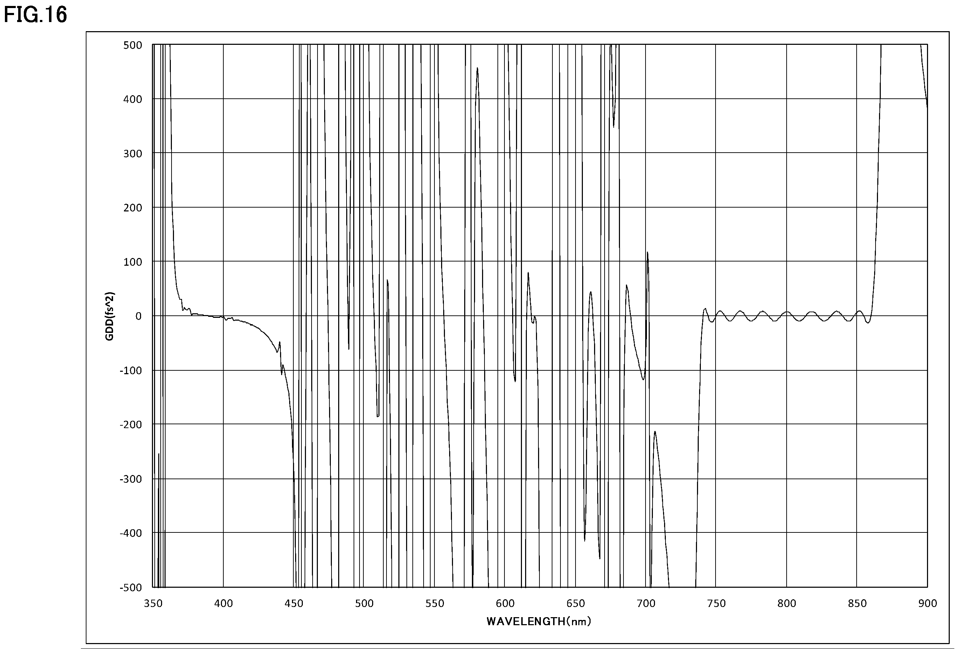

FIG. 13 to FIG. 16 are diagrams similar to FIG. 4 to FIG. 7, according to Example 3. It is noted that FIG. 14 to FIG. 16 are those obtained at an incidence angle of 5°, and the shown wavelength region is not less than 350 nm to 900 nm.

The optical multilayer film 4 of Example 3 is an alternate film in which odd number layers are $Ta_2O_5$ and even number layers are $SiO_2$, as in other Examples. The center wavelengths of Example 3 are 400 nm and 800 nm, as in Examples 1-1 to 2-2.

The total number of layers of the optical multilayer film 4 of Example 3 is 84.

Example 3 exhibits high reflection in a wavelength region (400 nm band) of not less than 360 nm and not greater than 455 nm, and in a wavelength region (800 nm band) of not less than 705 nm.

While the group delay GD of Example 3 is about 4 fs in the 400 nm band, the group delay GD is about 100 fs in the 800 nm band, and the difference of the latter relative to the former is about 96 fs.

The group delay dispersion GDD of Example 3 is about 0 $fs^2$ in the 400 nm band and in the 800 nm band. In Example 3, low dispersion is realized at (in wavelength regions including) these wavelengths, and the shapes of both of the 400 nm band optical pulse and the 800 nm band optical pulse are not changed.

Example 3 serves as a low-dispersion delay mirror 1 that delays, through a single time of reflection of each optical pulse and without deforming the optical pulse, an 800 nm band optical pulse with respect to a 400 nm band optical pulse by about 96 fs. In Example 3, with respect to the 400 nm band optical pulse and the 800 nm band optical pulse, a time difference can be provided in a coaxial manner through reflection along the same optical path.

[Example 4]

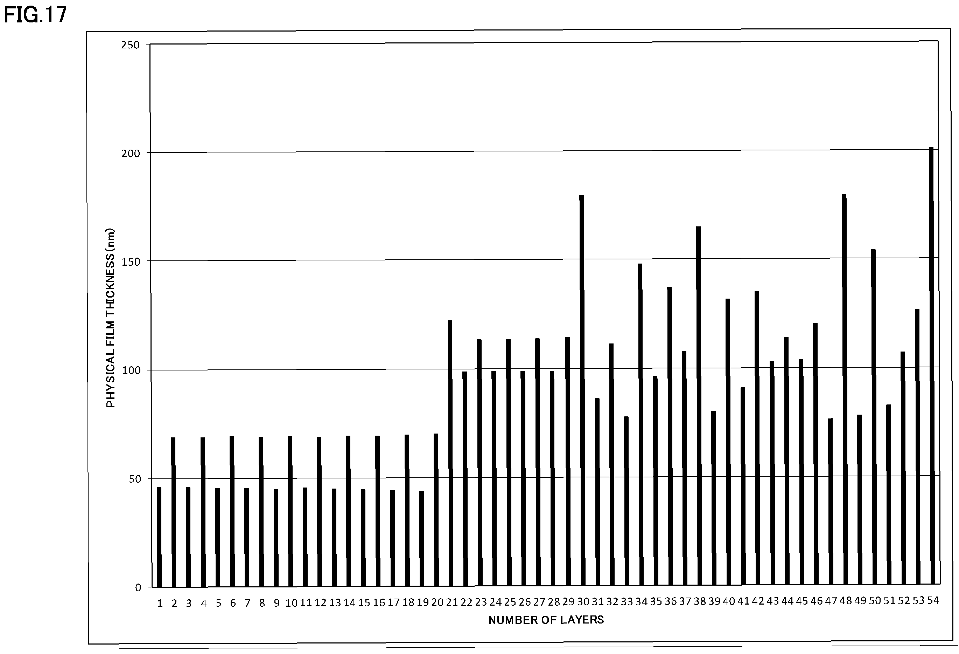

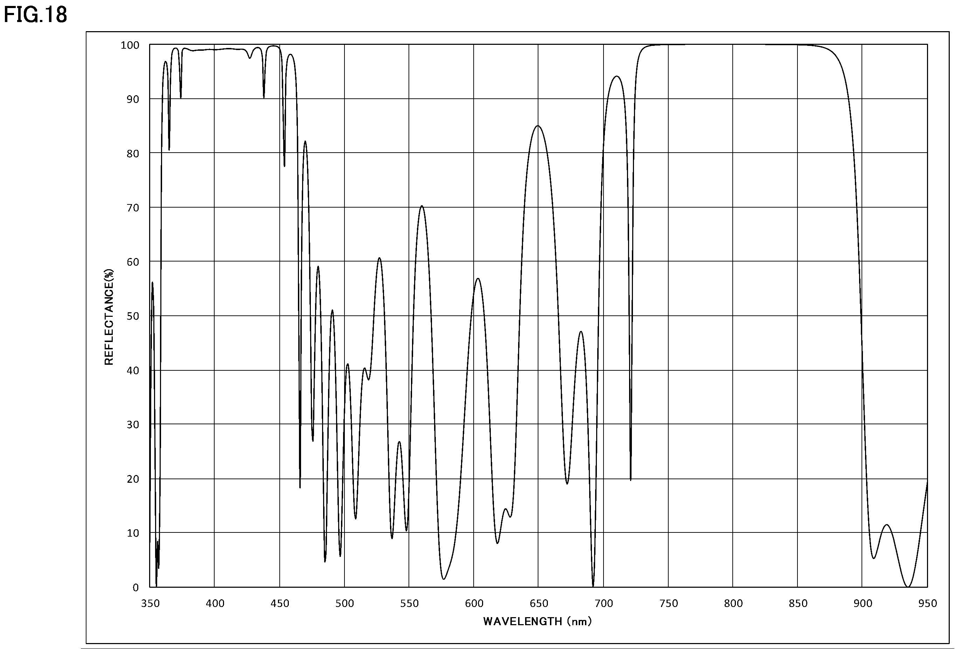

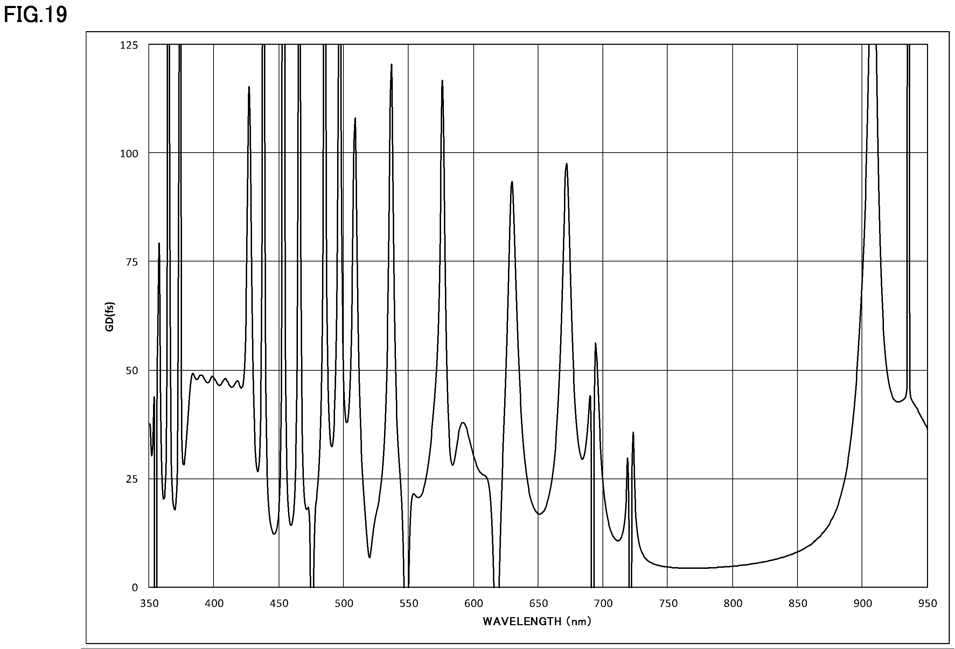

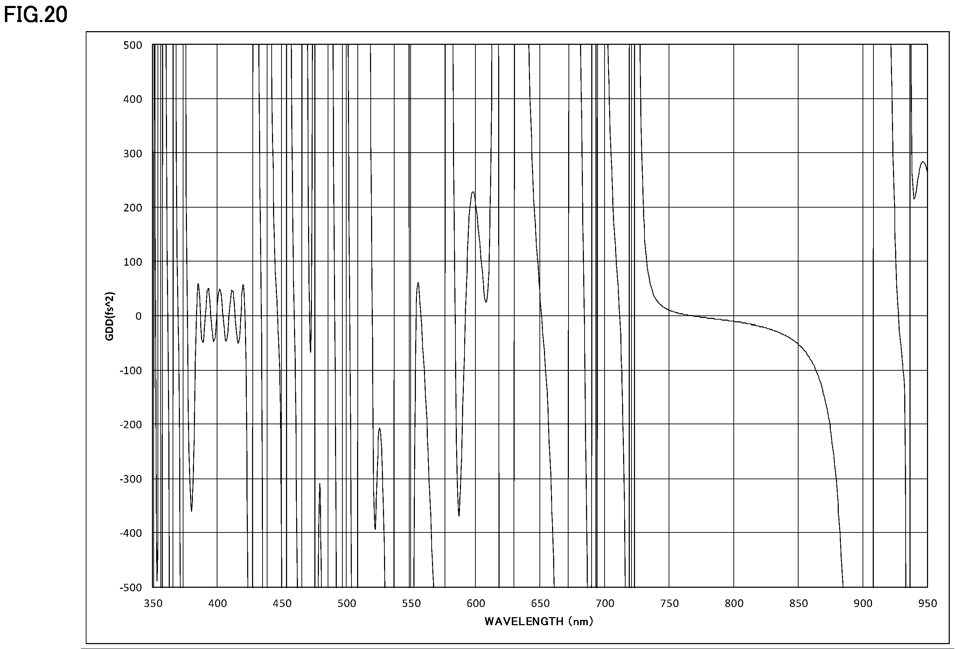

FIG. 17 to FIG. 20 are diagrams similar to FIG. 4 to FIG. 7, according to Example 4. It is noted that FIG. 18 to FIG. 20 are those obtained at an incidence angle of 5°, and the shown wavelength region is not less than 350 nm to 950 nm.

The optical multilayer film 4 of Example 4 is an alternate film in which odd number layers are $Ta_2O_5$ and even number layers are $SiO_2$, as in other Examples. The center wavelengths of Example 4 are 400 nm and 800 nm, as in Examples 1-1 to 3.

The total number of layers of the optical multilayer film 4 of Example 4 is 54.

Example 4 exhibits high reflection in a wavelength region (400 nm band) of not less than 370 nm and not greater than 430 nm, and in a wavelength region (800 nm band) of not less than 730 nm and not greater than 870 nm.

While the group delay GD of Example 4 is about 49 fs in the 400 nm band, the group delay GD is about 6 fs in the 800 nm band, and the difference of the latter relative to the former is about -43 fs.

The group delay dispersion GDD of Example 4 is about 0 $fs^2$ in the 400 nm band and in the 800 nm band. In Example 4, low dispersion is realized at (in wavelength regions including) these wavelengths, and the shapes of both of the 400 nm band optical pulse and the 800 nm band optical pulse are not changed.

Example 4 serves as a low-dispersion delay mirror 1 that delays, through a single time of reflection of each optical pulse and without deforming the optical pulse, a 400 nm band optical pulse with respect to an 800 nm band optical pulse by about 43 fs. In Example 4, with respect to the 400 nm band optical pulse and the 800 nm band optical pulse, a time difference can be provided in a coaxial manner through reflection along the same optical path.

[Example 5]

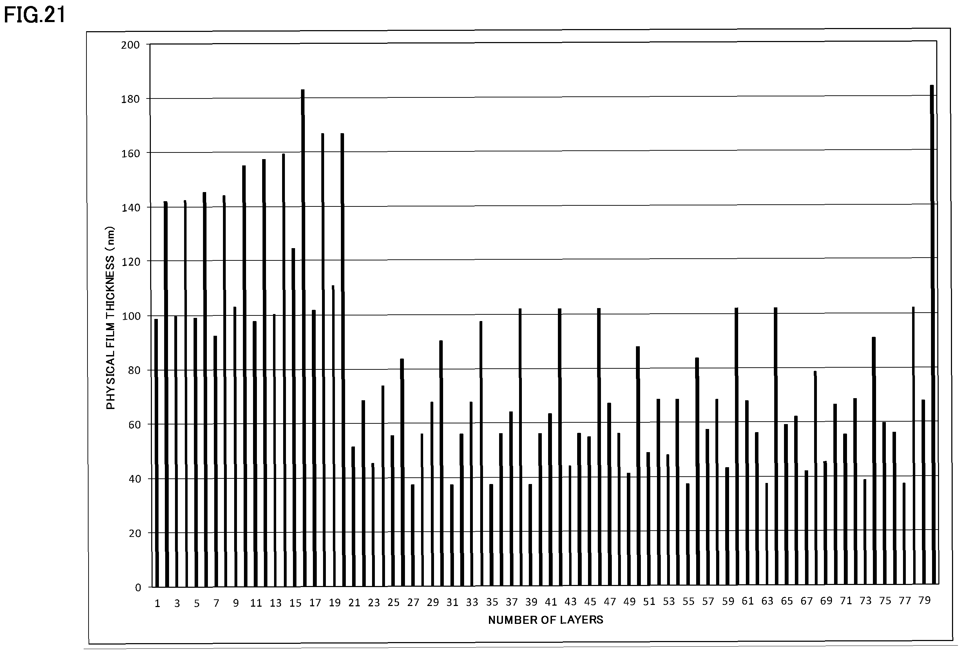

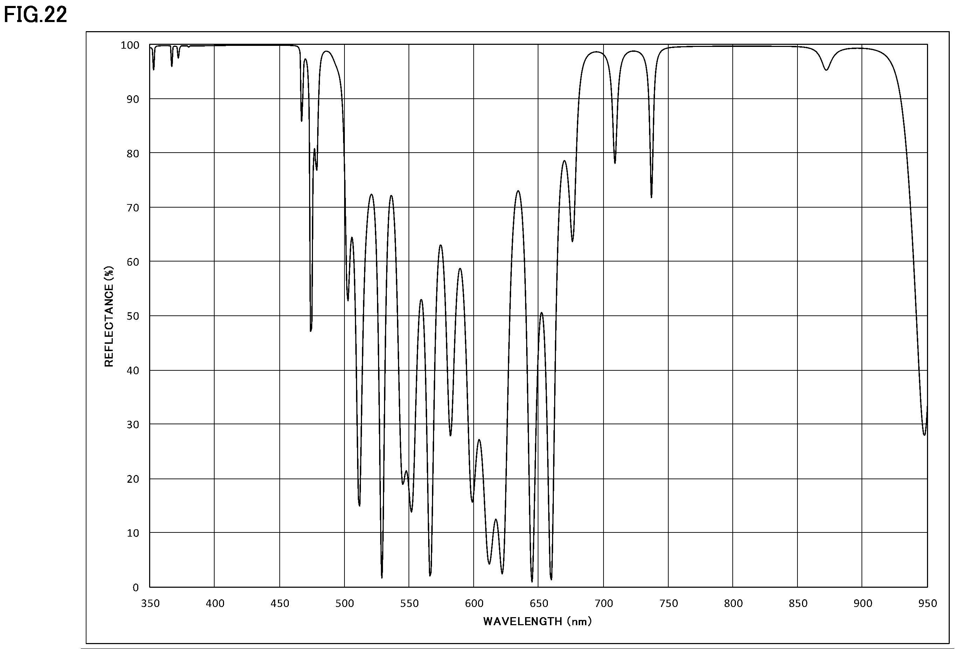

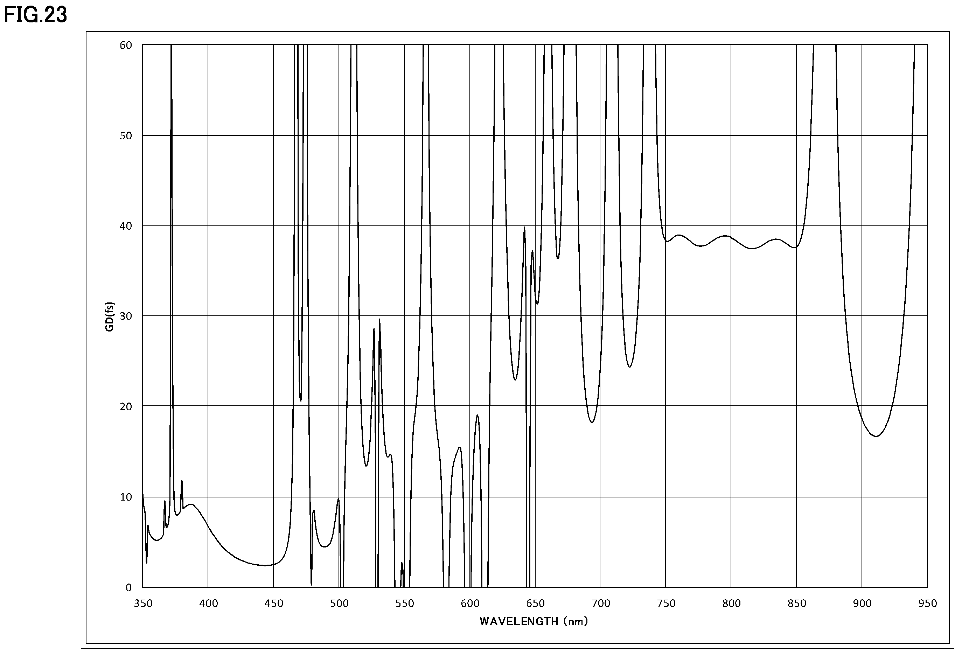

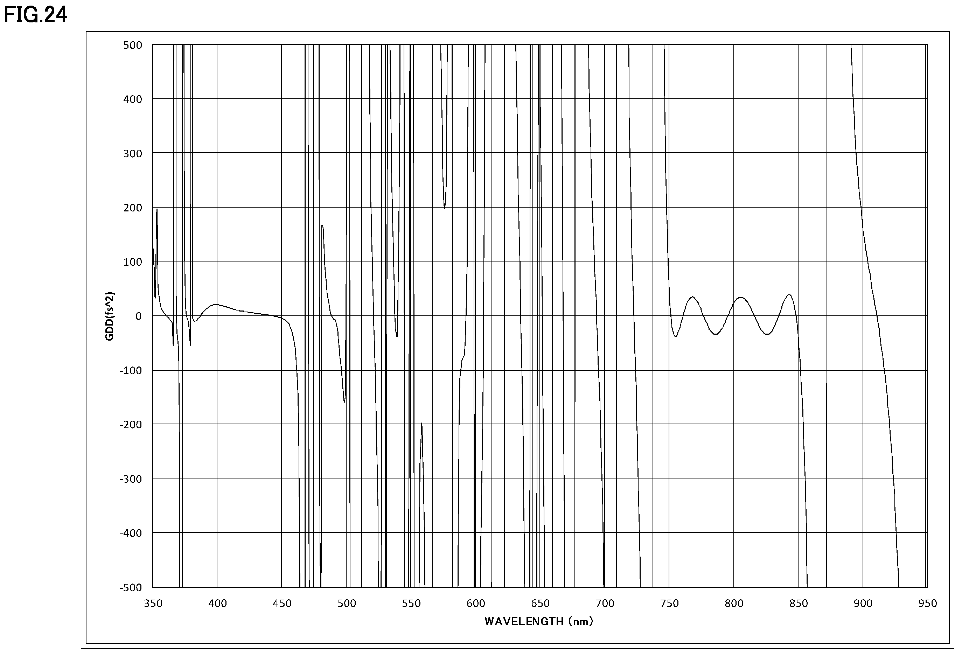

FIG. 21 to FIG. 24 are diagrams similar to FIG. 4 to FIG. 7, according to Example 5. It is noted that FIG. 22 to FIG. 24 are those obtained at an incidence angle of 45° according to s-polarized light, and the shown wavelength region is not less than 350 nm to 950 nm.

The optical multilayer film 4 of Example 5 is an alternate film in which odd number layers are $Ta_2O_5$ and even number layers are $SiO_2$, as in other Examples. The center wavelengths of Example 5 are 400 nm and 800 nm, as in Examples 1-1 to 4.

The total number of layers of the optical multilayer film 4 of Example 5 is 80.

Example 5 exhibits high reflection in a wavelength region (400 nm band) of not less than 375 nm and not greater than 470 nm, and in a wavelength region (800 nm band) of not less than 750 nm and not greater than 850 nm.

While the group delay GD of Example 5 is about 7 fs in the 400 nm band, the group delay GD is about 39 fs in the 800 nm band, and the difference of the latter relative to the former is about 32 fs.

The group delay dispersion GDD of Example 5 is about 0 $fs^2$ in the 400 nm band and in the 800 nm band. In Example 5, low dispersion is realized at (in wavelength regions including) these wavelengths, and the shapes of both of the 400 nm band optical pulse and the 800 nm band optical pulse are not changed.

Example 5 serves as a low-dispersion delay mirror 1 that delays, through a single time of reflection of each optical pulse having been s-polarized and without deforming the optical pulse according to s-polarization, a 400 nm band optical pulse with respect to an 800 nm band optical pulse by about 32 fs. In Example 5, with respect to the 400 nm band optical pulse and the 800 nm band optical pulse according to s-polarization, a time difference can be provided in a coaxial manner through reflection along the same optical path.

[Example 6]

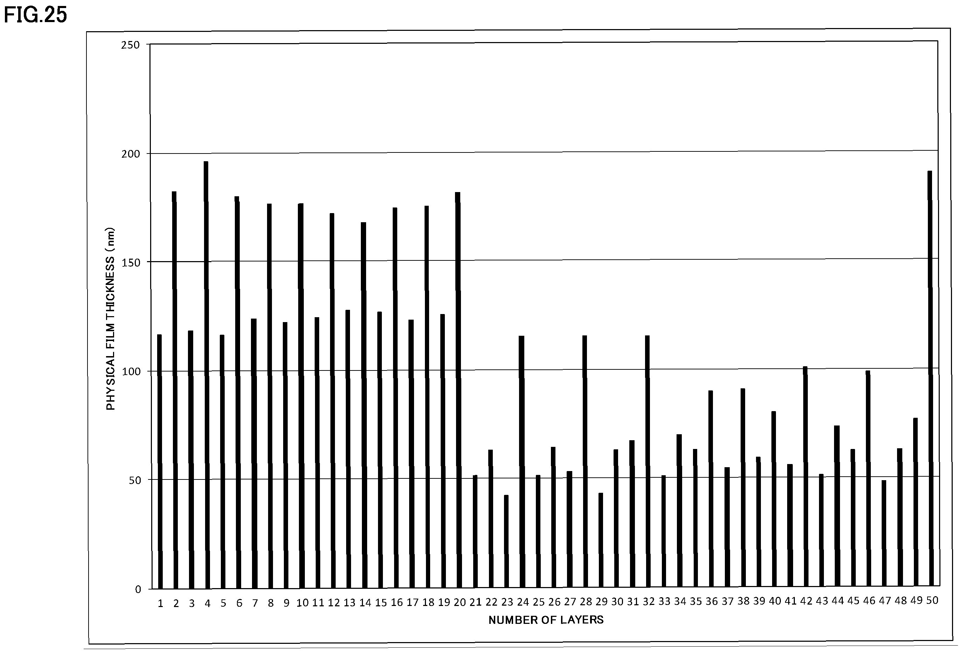

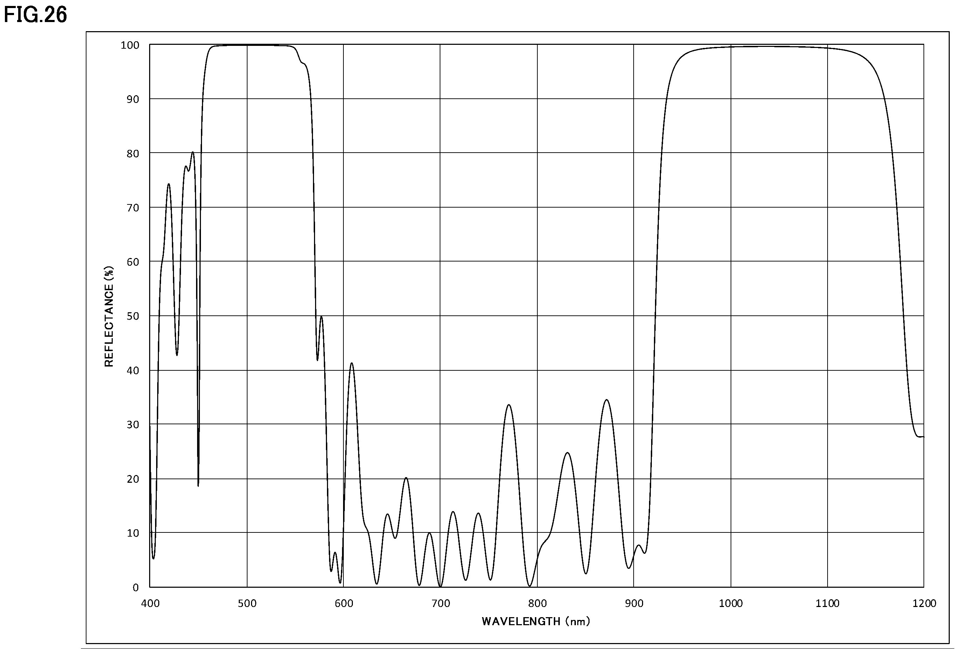

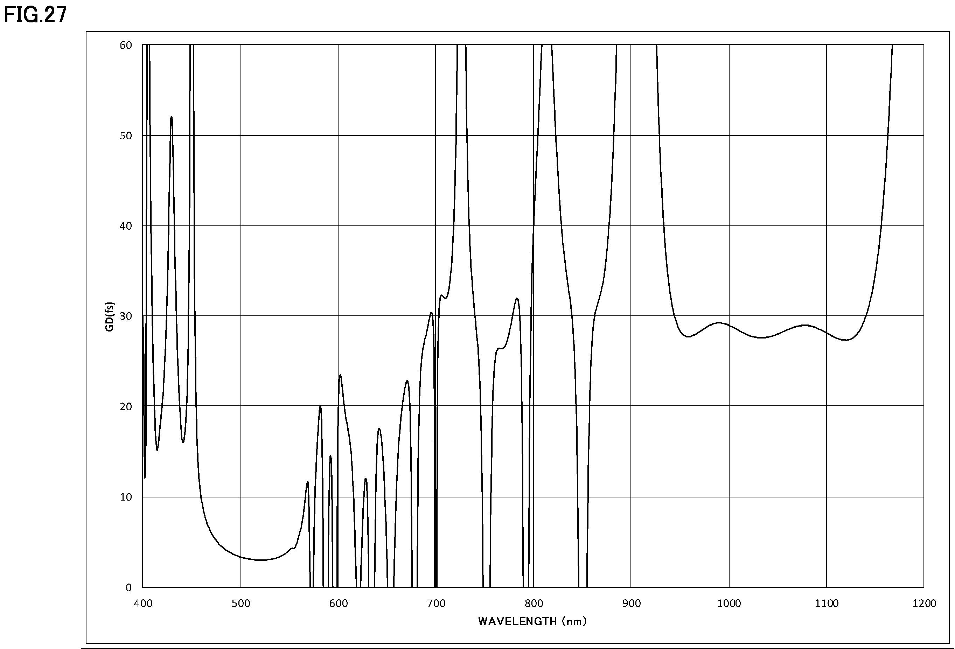

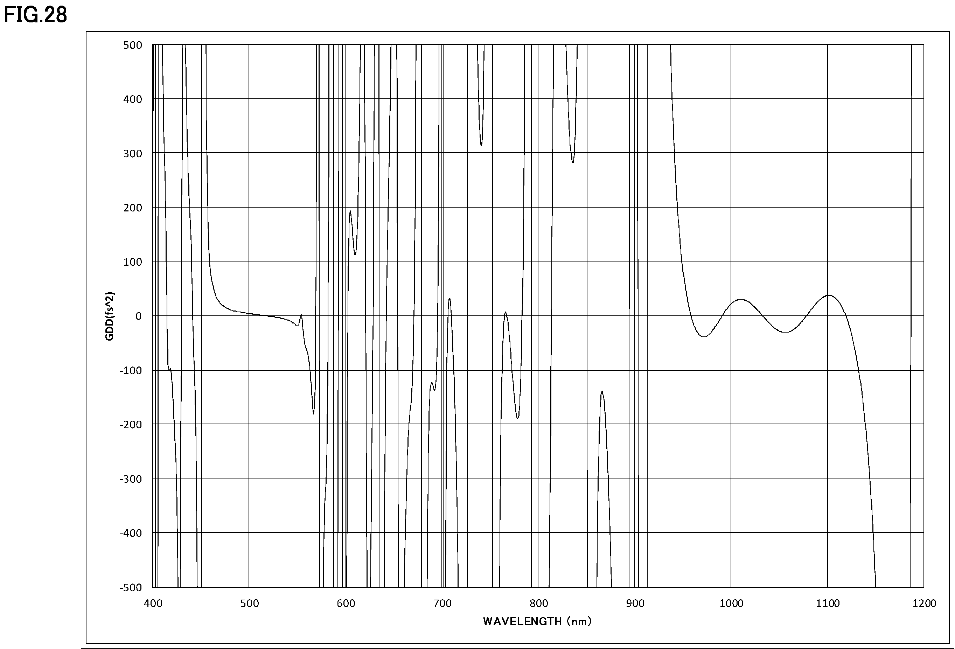

FIG. 25 to FIG. 28 are diagrams similar to FIG. 4 to FIG. 7 according to Example 6. It is noted that FIG. 26 to FIG. 28 are those obtained at an incidence angle of 5°, and the shown wavelength region is not less than 400 nm to 1200 nm.

The optical multilayer film 4 of Example 6 is an alternate film in which odd number layers are $Ta_2O_5$ and even number layers are $SiO_2$, as in other Examples. The center wavelengths of Example 6 are 515 nm and 1030 nm, which are different from those in Examples 1-1 to 5.

The total number of layers of the optical multilayer film 4 of Example 6 is 50.

Example 6 exhibits high reflection in a wavelength region (515 nm band) of not less than 460 nm and not greater than 550 nm, and in a wavelength region (1030 nm band) of not less than 980 nm and not greater than 1100 nm.

While the group delay GD of Example 6 is about 3 fs in the 515 nm band, the group delay GD is about 28 fs in the 1030 nm band, and the difference of the latter relative to the former is about 25 fs.

The group delay dispersion GDD of Example 6 is about 0 $fs^2$ at 515 nm and at 1030 nm. In Example 6, low dispersion is realized at (in wavelength regions including) these wavelengths, and the shapes of both of the 515 nm band optical pulse and the 1030 nm band optical pulse are not changed.

Example 6 serves as a low-dispersion delay mirror 1 that delays, through a single time of reflection of each optical pulse and without deforming the optical pulse, the 1030 nm band optical pulse with respect to the 515 nm band optical pulse by about 25 fs. In Example 6, with respect to the 515 nm band optical pulse and the 1030 nm band optical pulse, a time difference can be provided in a coaxial manner through reflection along the same optical path.

[Example 7]

The optical multilayer film 4 of Example 7 is designed to be used in a case where, with respect to a fundamental wave (800 nm band) and a second harmonic (400 nm band) of a titanium sapphire laser, dispersion compensation for these is performed, and the fundamental wave is delayed with respect to the second harmonic. It is noted that at least one of the wavelength band to which the wavelength of the fundamental wave belongs and the wavelength band to which the wavelength of the second harmonic belongs may be changed from the 800 nm band and the 400 nm band. Further, a laser other than the titanium sapphire laser may be used.

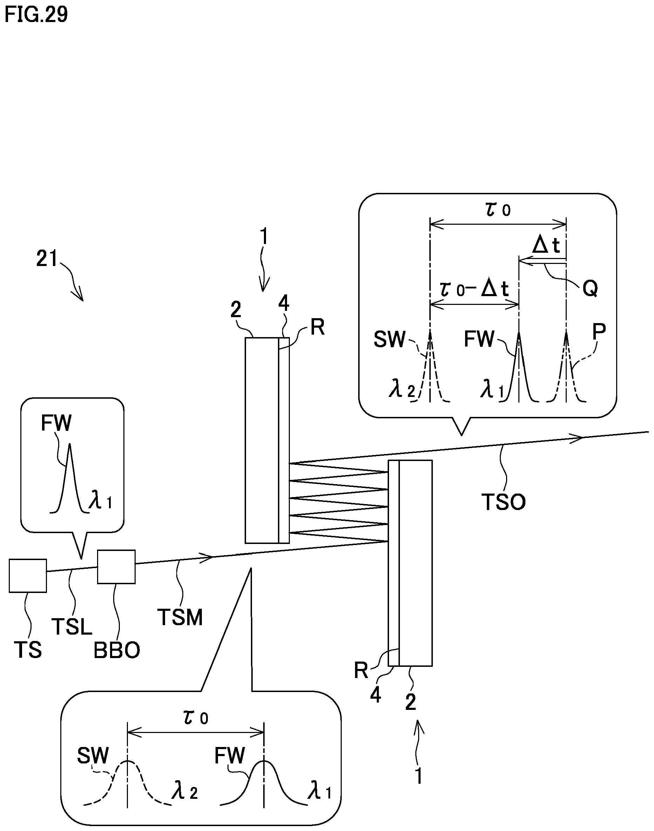

FIG. 29 is a schematic diagram of this case (laser system 21).

The laser system 21 has a titanium sapphire laser light source TS, a nonlinear optical crystal BBO, and two delay mirrors 1 (Example 7) which partially face each other and which are the same as those in the delay mirror system 11.

Laser light TSL (here, a wavelength $\lambda_1$ of the fundamental wave FW is 800 nm) including only the fundamental wave FW emitted from the titanium sapphire laser light source TS enters the nonlinear optical crystal BBO. The nonlinear optical crystal BBO generates a second harmonic SW having a wavelength ($\lambda_2$=400 nm) being half of that of the fundamental wave FW, and emits mixed light TSM in which the fundamental wave FW and the second harmonic SW are mixed. In the mixed light TSM, the second harmonic SW is delayed with respect to the fundamental wave FW by a delay time $\tau_0$. The mixed light TSM is reflected by the pair of delay mirrors 1 a predetermined number of times, to become output light TSO. In a case where the delay mirrors 1 do not delay a 400 nm band optical pulse and delay an 800 nm band optical pulse, and if the latter is delayed with respect to the former by a time difference $\Delta t$ due to the predetermined number of times of reflection, the fundamental wave FW is delayed (see the double arrow Q in FIG. 29), in the output light TSO, by a time difference $\Delta t$ with respect to a state (see the two-dot chain line P in FIG. 29) where the fundamental wave FW precedes the second harmonic SW by a delay time $\tau_0$ in the mixed light TSM, and the second harmonic SW is delayed with respect to the fundamental wave FW by an adjusted delay time $\tau_0$-$\Delta t$. Similarly, when the 400 nm band optical pulse is delayed by a smaller extent with respect to the 800 nm band optical pulse, it can be considered that the former is relatively delayed with respect to the latter by the time difference $\Delta t$ due to a predetermined number of times of reflection, and the fundamental wave FW is delayed with respect to the second harmonic SW from the state of the mixed light TSM by an adjusted delay time $\tau_0$-$\Delta t$.

Group velocity of light passing through the inside of the nonlinear optical crystal BBO is wavelength-dependent. Therefore, in the fundamental wave FW and the second harmonic SW passing through the nonlinear optical crystal BBO, a shift in the speed of light for each wavelength, i.e., a chirp, occurs. Due to generation of such a chirp, the pulse widths of the optical pulses forming the fundamental wave FW and the second harmonic SW are broadened or the peak intensities decrease.

It is noted that when the wavelength is defined as $\lambda$ (nm), the refractive index of a medium being a function of the wavelength $\lambda$ is defined as n ($\lambda$), and the light velocity is defined as c (nm/fs), the group velocity $V_g$ (nm/fs) is represented by the following formula (5).

[Math. 2]

$$V_g = \frac{c}{n(\lambda) - \lambda \dfrac{\partial n}{\partial \lambda}} \qquad (5)$$

Then, as an index for the shift of the group velocity, a group velocity dispersion GVD ($fs^2$/cm, femtosecond femtosecond per centimeter) represented by the following formula (6) is used. The group velocity dispersion GVD is related to the slope of the group velocity. If the group velocity dispersion GVD=0, the group velocity has no wavelength-dependency, and no chirp occurs in the optical pulse propagating in the medium. On the other hand, when the group velocity dispersion GVD≠0, the group velocity has wavelength-dependency, and a chirp occurs in the optical pulse propagating in the medium having the group velocity dispersion GVD≠0.

[Math. 3]

$$GVD = \frac{\partial V_g^{-1}}{\partial \omega} = \frac{\lambda^2}{2\pi c V_g^2} \frac{\partial V_g}{\partial \lambda} \qquad (6)$$

Dispersion compensation performed when an optical pulse having passed through a predetermined propagation path is reflected by the delay mirrors 1 of Example 7 is maximized when the following formula (7) is satisfied.

Here, i is a number provided for each kind of medium in the propagation path. When the nonlinear optical crystal BBO and air are present in the propagation path, i=1 (the nonlinear optical crystal BBO) and i=2 (air), for example. Further, $GVD_1$ is the group velocity dispersion GVD of the nonlinear optical crystal BBO, and $GVD_2$ is the group velocity dispersion GVD of air. Further, a thickness $_1$ of a medium is the thickness (the path length in the nonlinear optical crystal BBO) of the nonlinear optical crystal BBO, and a thickness $_2$ of a medium is the thickness (the path length in air) of air.

That is, when the delay mirror 1 of Example 7 is configured to have a group delay dispersion GDD with which the group velocity dispersion GVD in the entirety of the propagation path is canceled, dispersion compensation is realized. [Math. 4]

$$\sum_i (GVD_i \times \text{thickness}_i \text{ of medium}) + GDD = 0 \qquad (7)$$

In a wavelength region of not less than 400 nm to 1200 nm, both of the group velocity dispersion $GVD_1$ of the nonlinear optical crystal BBO and the group velocity dispersion $GVD_2$ of air monotonously decrease. The group velocity dispersion $GVD_1$, that is representative, of the nonlinear optical crystal BBO with respect to light having a wavelength of 400 nm is 2100 $fs^2$/cm, the group velocity dispersion $GVD_1$ of the nonlinear optical crystal BBO with respect to light having a wavelength of 800 nm is 1000 $fs^2$/cm, the group velocity dispersion $GVD_2$ of air with respect to light having a wavelength of 800 nm is 0.21 $fs^2$/cm, and these are in similar orders also for other wavelengths. Therefore, the group velocity dispersion $GVD_1$ of the nonlinear optical crystal BBO is about 10000-fold of the group velocity dispersion $GVD_2$ of air, and roughly saying, the $GVD_1$ during advancement by 0.1 mm in the nonlinear optical crystal BBO and the $GVD_2$ during advancement by 1 m (meter) in air are substantially the same with each other.

The propagation path is determined by the laser light TSL, the nonlinear optical crystal BBO, the mixed light TSM, the path between both delay mirrors 1, and the output light TSO. The group delay dispersion GDD in the delay mirror 1 of Example 7 can be determined so as to be dispersion-compensated in the laser system 21. Alternatively, when the product of the group velocity dispersion $GVD_2$ of air and the thickness $_2$ of medium being air is sufficiently small, the group delay dispersion GDD in the delay mirror 1 of Example 7 may be determined by the group velocity dispersion $GVD_1$ of the nonlinear optical crystal BBO $\times$ the thickness $_1$ of the medium.

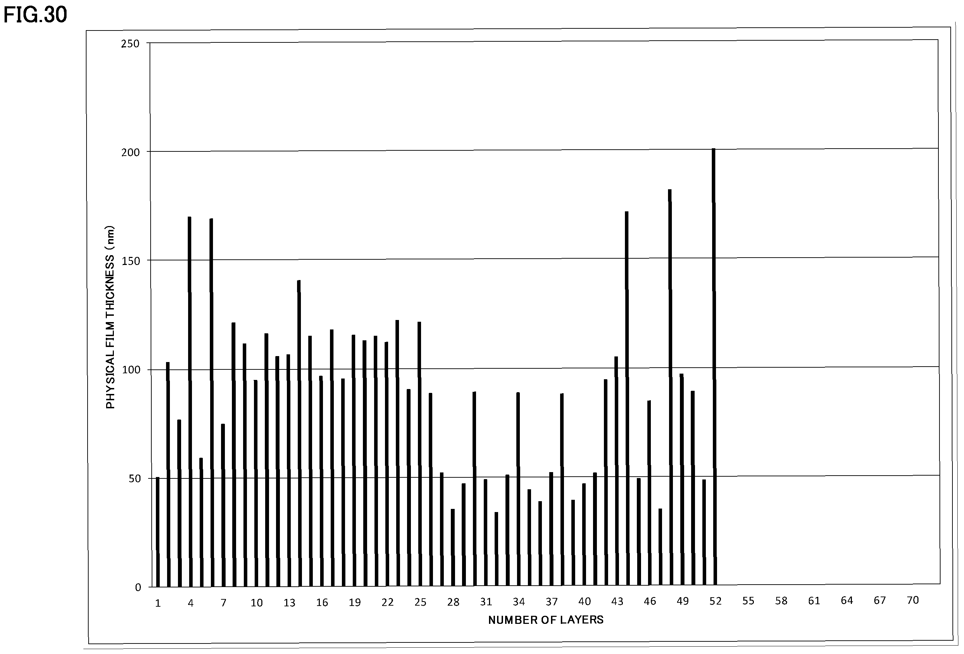

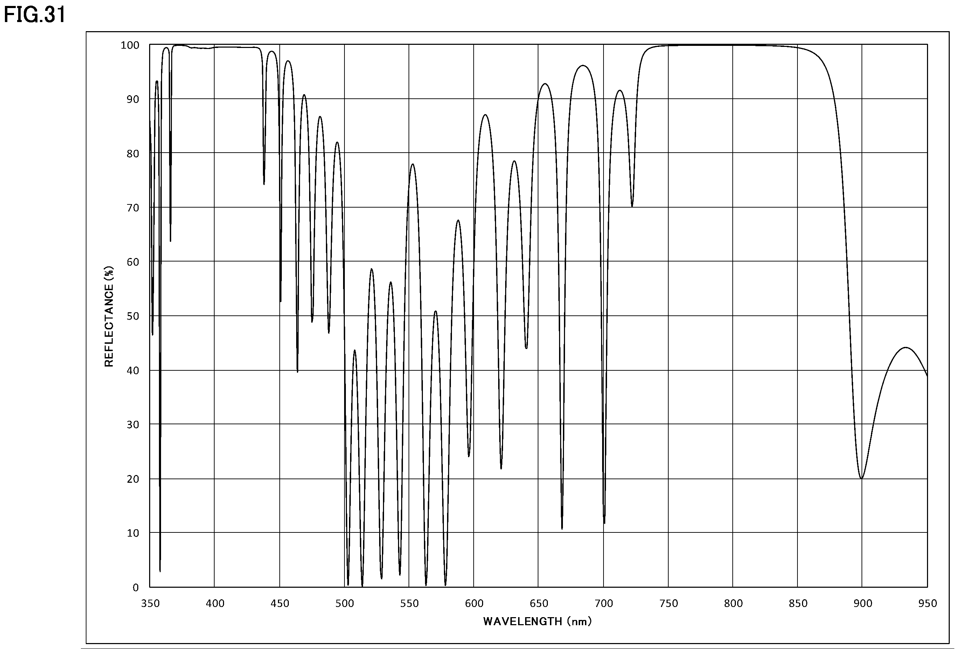

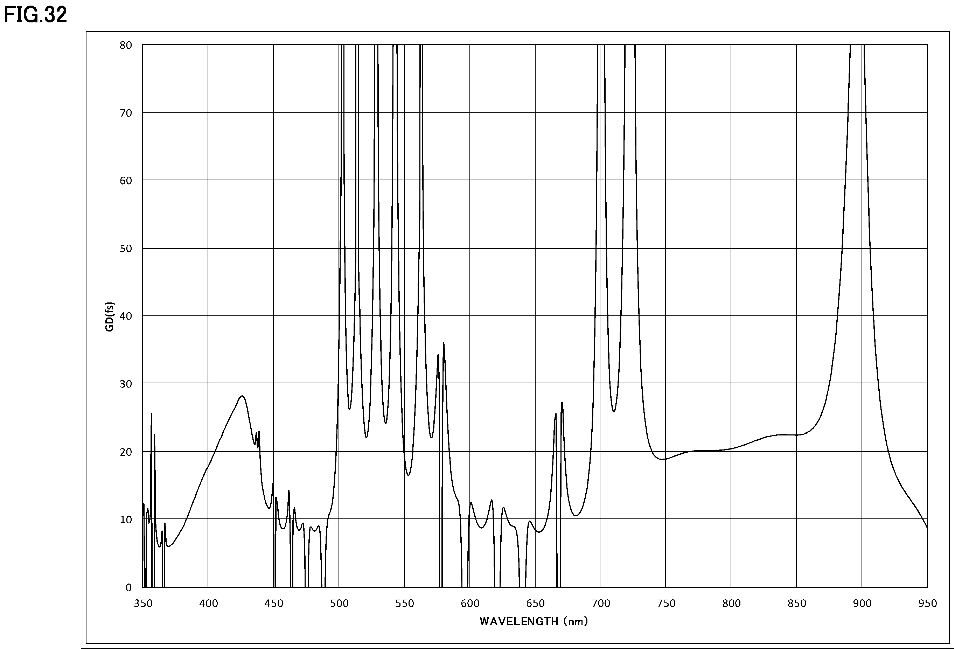

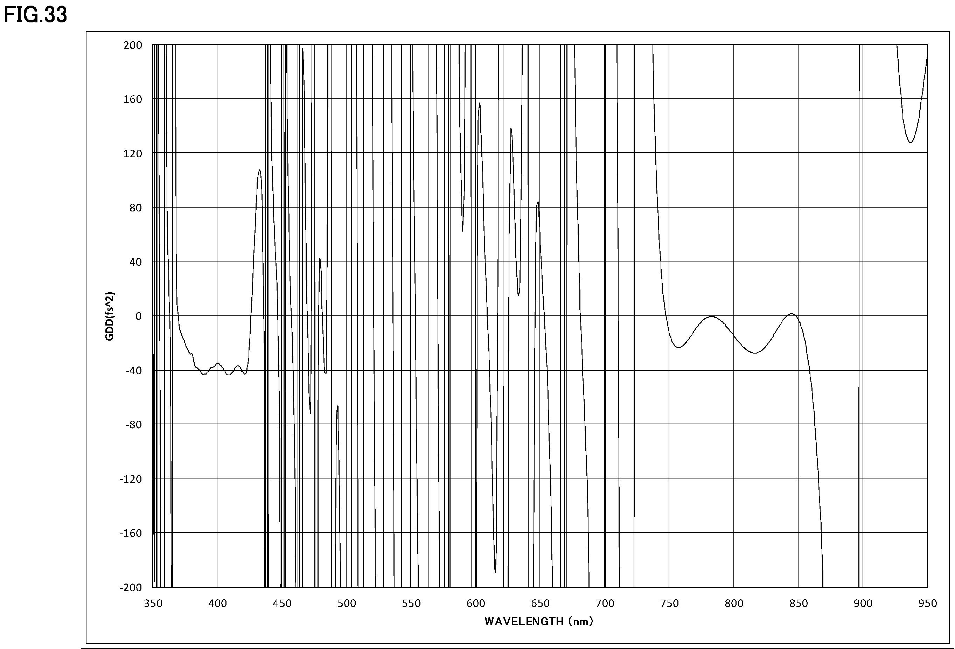

FIG. 30 to FIG. 33 are diagrams similar to FIG. 4 to FIG. 7, according to Example 7. FIG. 31 to FIG. 33 are those obtained at an incidence angle of 5°.

The optical multilayer film 4 of Example 7 is an alternate film in which odd number layers are $Ta_2O_5$ and even number layers are $SiO_2$, as in other Examples. The center wavelengths of Example 7 are 400 nm and 800 nm, as in Examples 1-1 to 5.

The total number of layers of the optical multilayer film 4 of Example 7 is 52.

Example 7 exhibits high reflection in a wavelength region (400 nm band) of not less than 370 nm and not greater than 435 nm, and in a wavelength region (800 nm band) of not less than 730 nm and not greater than 850 nm.

While the group delay GD of Example 7 is about 18 fs in the 400 nm band, the group delay GD is about 20.7 fs in the 800 nm band, and the difference of the latter relative to the former is about 2.7 fs. In Example 7, through ten times of reflection of each optical pulse, the 800 nm band optical pulse is delayed by 2.7×10=27 fs with respect to the 400 nm band optical pulse.

The group delay dispersion GDD of Example 7 is about -40 $fs^2$ in the 400 nm band, and is about -15 $fs^2$ in the 800 nm band. Example 7 has negative dispersions, suitable for dispersion compensation, in the 400 nm band and the 800 nm band, respectively, in ten times of reflection.

The pair of Examples 7 is configured such that: as a result of a total of ten times of reflection of each optical pulse, the fundamental wave FW and the second harmonic SW in which chirps have occurred in the mixed light TSM are restored through dispersion compensation to those before the entry into the nonlinear optical crystal BBO; and further, the fundamental wave FW including an 800 nm band optical pulse is delayed by about 27 fs with respect to the second harmonic SW including a 400 nm band optical pulse (the time difference Δt in FIG. 29). In Example 7, with respect to the fundamental wave FW and the second harmonic SW, the time difference Δt and dispersion compensation can be provided in a coaxial manner through reflection along the same optical path. That is, the delay mirror 1 of Example 7 has a dispersion compensation function for the fundamental wave FW and the second harmonic SW, in addition to a delay function for the fundamental wave FW and the second harmonic SW.

It is noted that the number of times of reflection is not limited to 10. This also applies hereafter.

[Example 8]

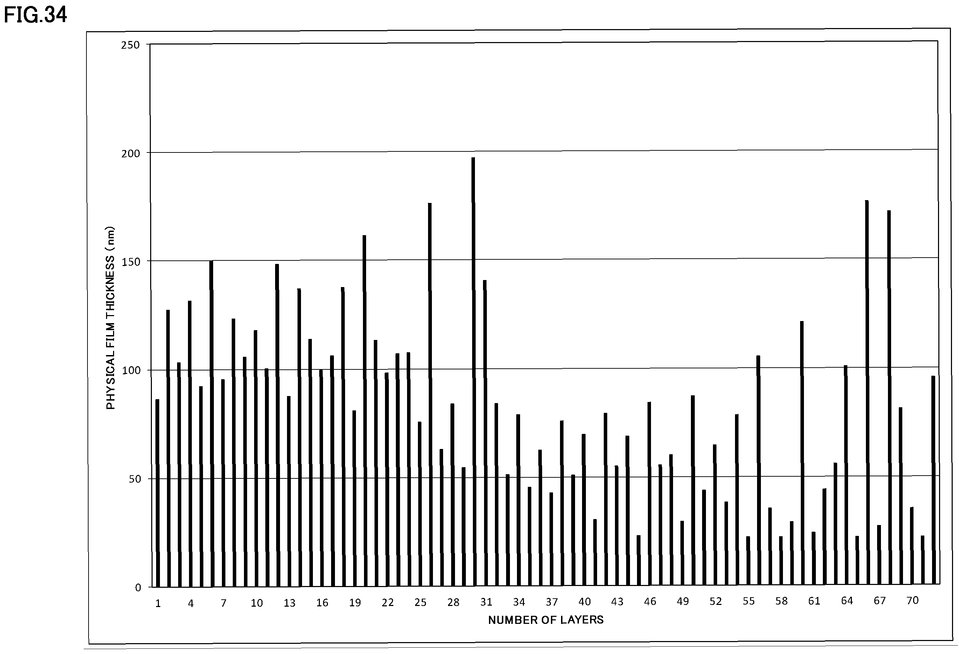

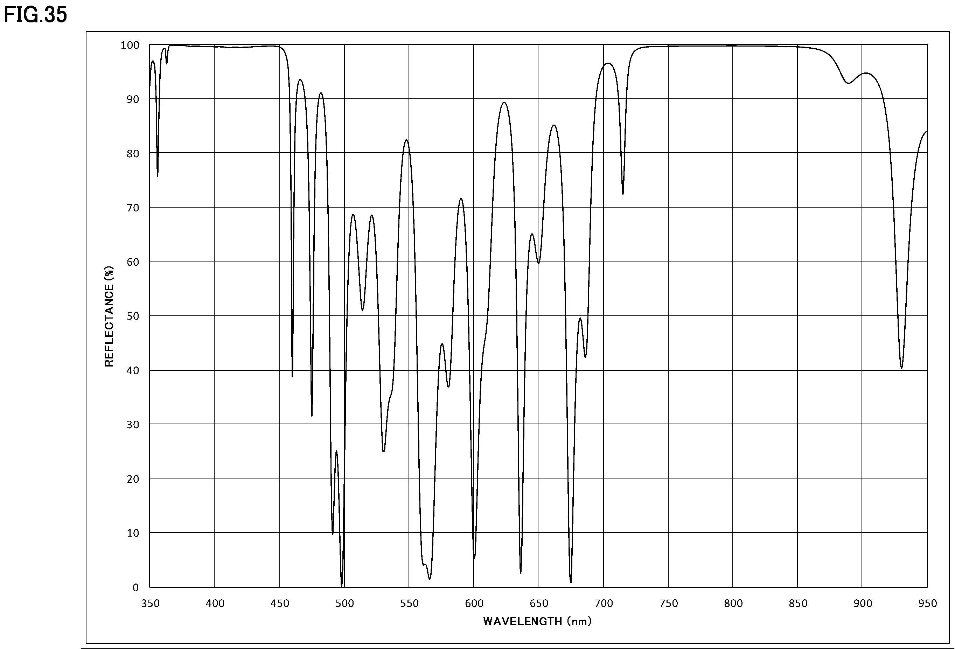

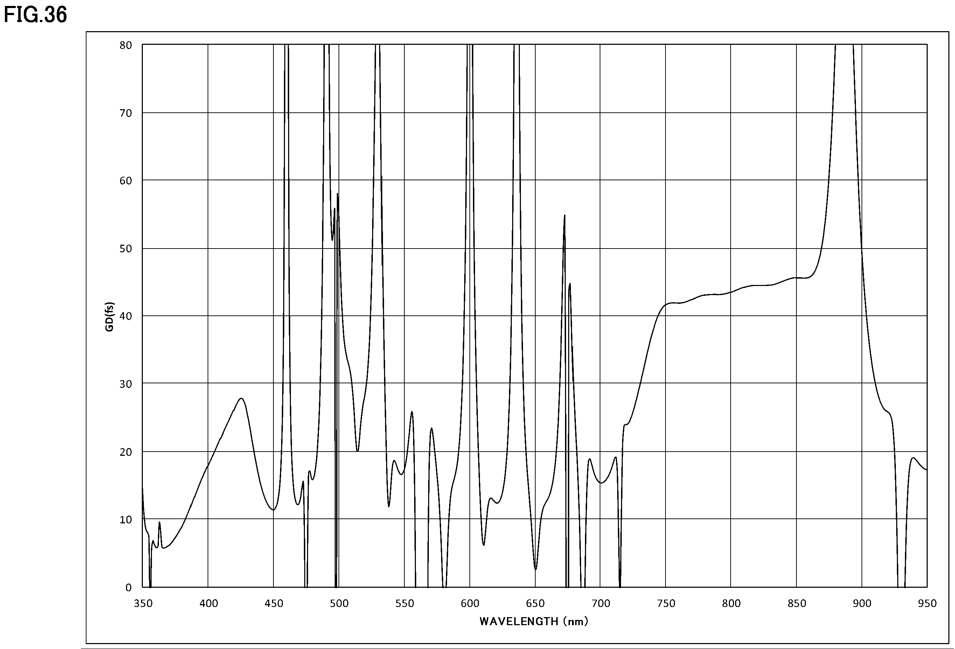

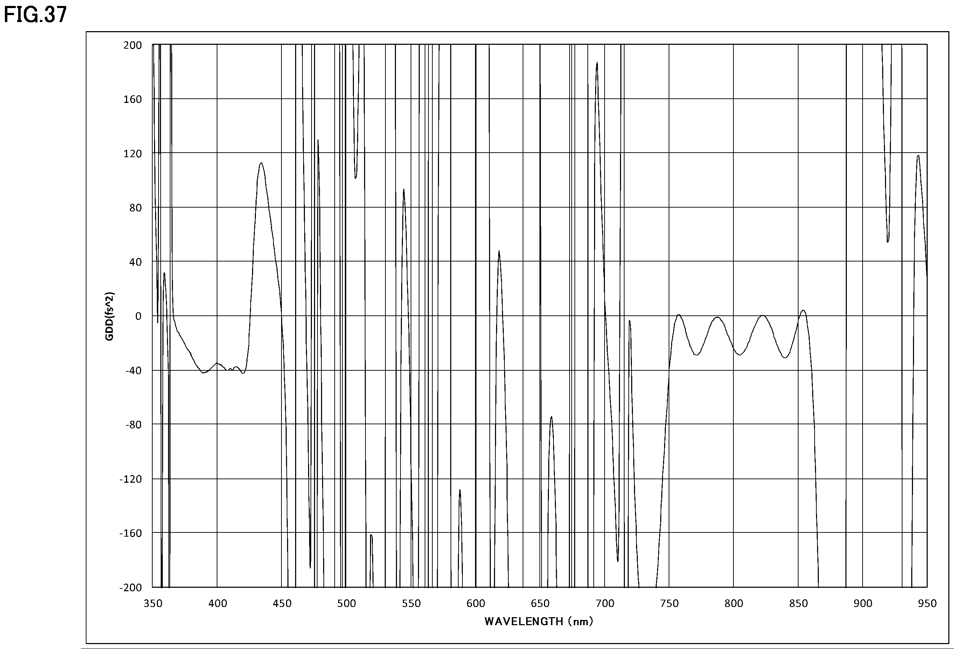

FIG. 34 to FIG. 37 are diagrams similar to FIG. 4 to FIG. 7, according to Example 8. It is noted that FIG. 35 to FIG. 37 are those obtained at an incidence angle of 5°, and the shown wavelength region is not less than 350 nm to 950 nm.

The optical multilayer film 4 of Example 8 is an alternate film in which odd number layers are $Ta_2O_5$ and even number layers are $SiO_2$, as in other Examples. The center wavelengths of Example 8 are 400 nm and 800 nm, as in Examples 1-1 to 5 and 7.

The total number of layers of the optical multilayer film 4 of Example 8 is 72.

Similar to Example 7, in Example 8, delay and dispersion compensation are performed.

Example 8 exhibits high reflection in a wavelength region (400 nm band) of not less than 360 nm and not greater than 450 nm, and in a wavelength region (800 nm band) of not less than 725 nm and not greater than 850 nm.

While the group delay GD of Example 8 is about 18 fs in the 400 nm band, the group delay GD is about 44 fs in the 800 nm band, and the difference of the latter relative to the former is about 26 fs. In Example 8, through ten times of reflection of each optical pulse, the 800 nm band optical pulse is delayed by about $26 \times 10 =$ about 260 fs with respect to the 400 nm band optical pulse.

The group delay dispersion GDD of Example 8 is about -40 $fs^2$ in the 400 nm band, and is about -15 $fs^2$ in the 800 nm band. Example 8 has negative dispersions, suitable for dispersion compensation, in the 400 nm band and the 800 nm band, respectively, in ten times of reflection.

The pair of Examples 8 is configured such that: as a result of a total of ten times of reflection of each optical pulse, the fundamental wave FW and the second harmonic SW in which chirps have occurred are subjected to dispersion compensation; and further, the fundamental wave FW is delayed by about 260 fs with respect to the second harmonic SW. In Example 8, with respect to the fundamental wave FW and the second harmonic SW, a time difference and dispersion compensation can be provided in a coaxial manner through reflection along the same optical path.

[Example 9]

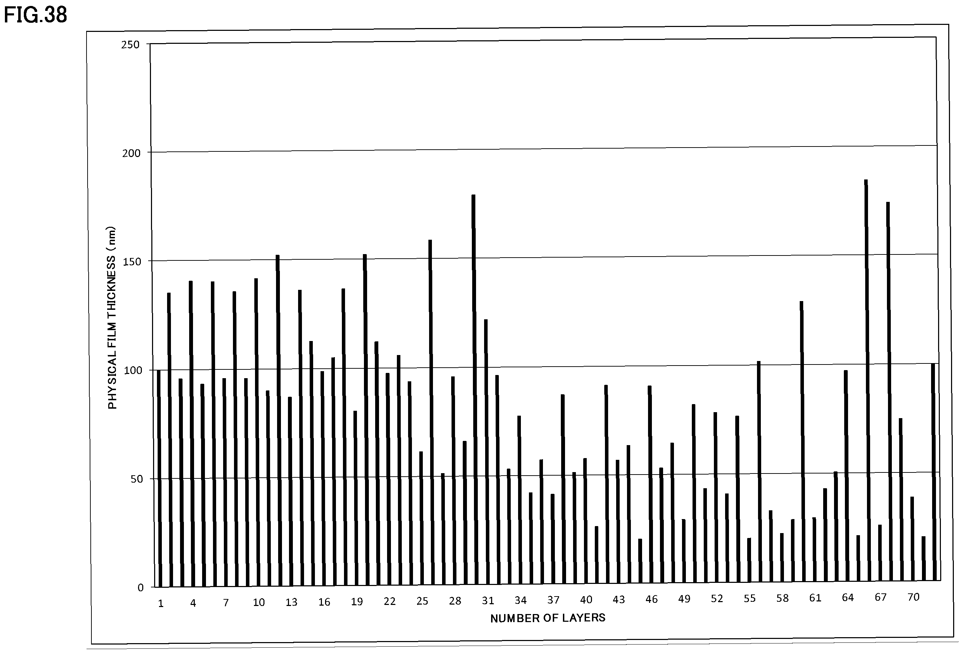

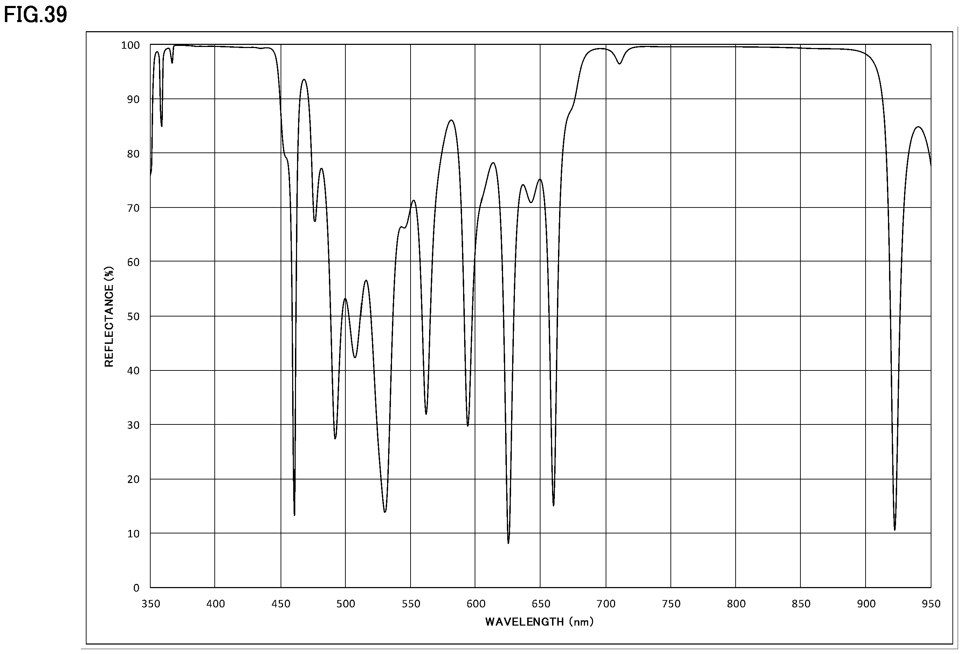

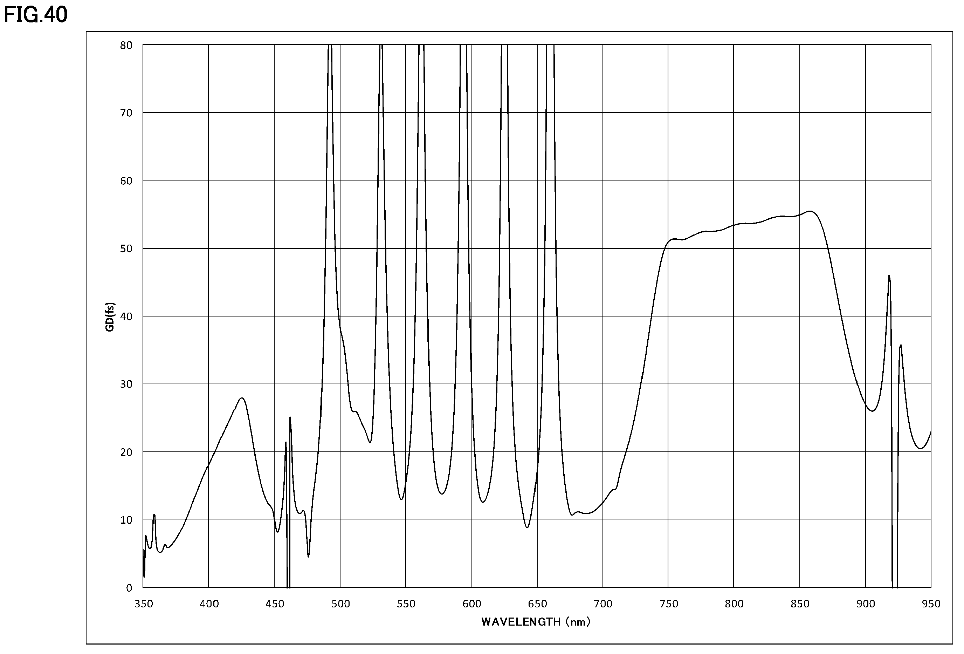

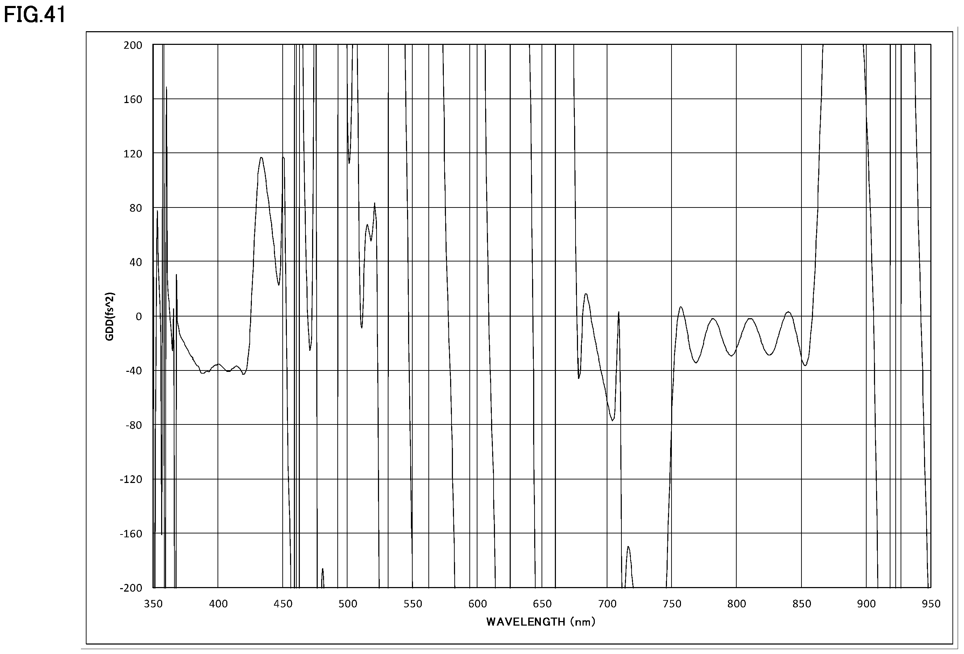

FIG. 38 to FIG. 41 are diagrams similar to FIG. 4 to FIG. 7, according to Example 9. It is noted that FIG. 39 to FIG. 41 are those obtained at an incidence angle of 5°, and the shown wavelength region is not less than 350 nm to 950 nm.

The optical multilayer film 4 of Example 9 is an alternate film in which odd number layers are $Ta_2O_5$ and even number layers are $SiO_2$, as in other Examples. The center wavelengths of Example 9 are 400 nm and 800 nm, as in Examples 1-1 to 5 and 7 to 8.

The total number of layers of the optical multilayer film 4 of Example 9 is 72.

Similar to Examples 7 and 8, in Example 9, delay and dispersion compensation are performed.

Example 9 exhibits high reflection in a wavelength region (400 nm band) of not less than 370 nm and not greater than 440 nm, and in a wavelength region (800 nm band) of not less than 720 nm and not greater than 900 nm.

While the group delay GD of Example 9 is about 18 fs in the 400 nm band, the group delay GD is about 53 fs in the 800 nm band, and the difference of the latter relative to the former is about 35 fs. In Example 9, through ten times of reflection of each optical pulse, the 800 nm band optical pulse is delayed by about $35 \times 10 =$ about 350 fs with respect to the 400 nm band optical pulse.

The group delay dispersion GDD of Example 9 is about -40 $fs^2$ in the 400 nm band, and is about -15 $fs^2$ in the 800 nm band. Example 9 has negative dispersions, suitable for dispersion compensation, in the 400 nm band and the 800 nm band, respectively, in ten times of reflection.

The pair of Examples 9 is configured such that: as a result of a total of ten times of reflection of each optical pulse, the fundamental wave FW and the second harmonic SW in which chirps have occurred are subjected to dispersion compensation; and further, the fundamental wave FW is delayed by about 350 fs with respect to the second harmonic SW. In Example 9, with respect to the fundamental wave FW and the second harmonic SW, a time difference and dispersion compensation can be provided in a coaxial manner through reflection along the same optical path.

[Example 10]

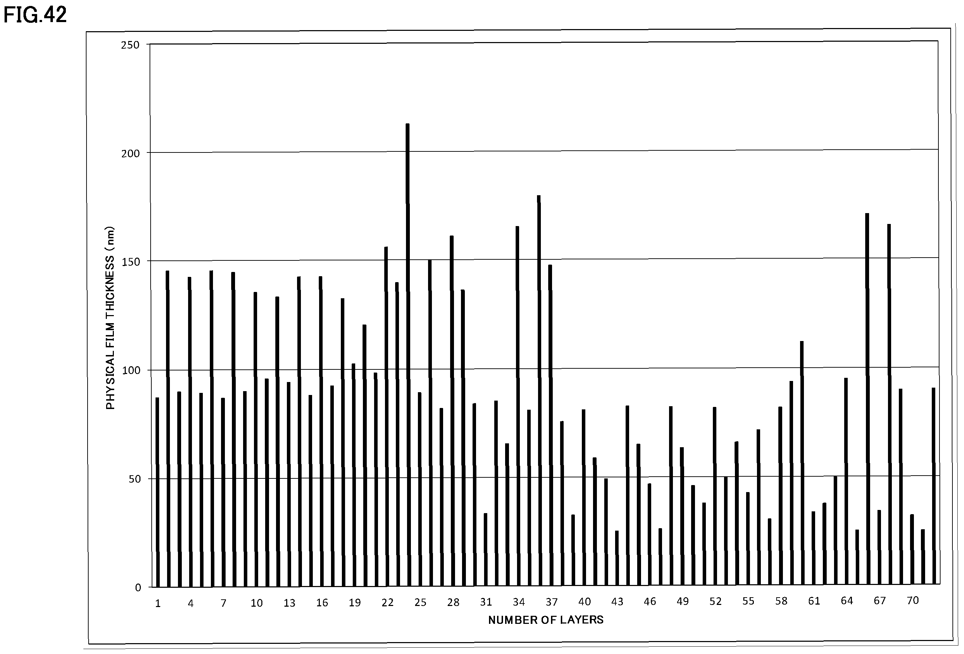

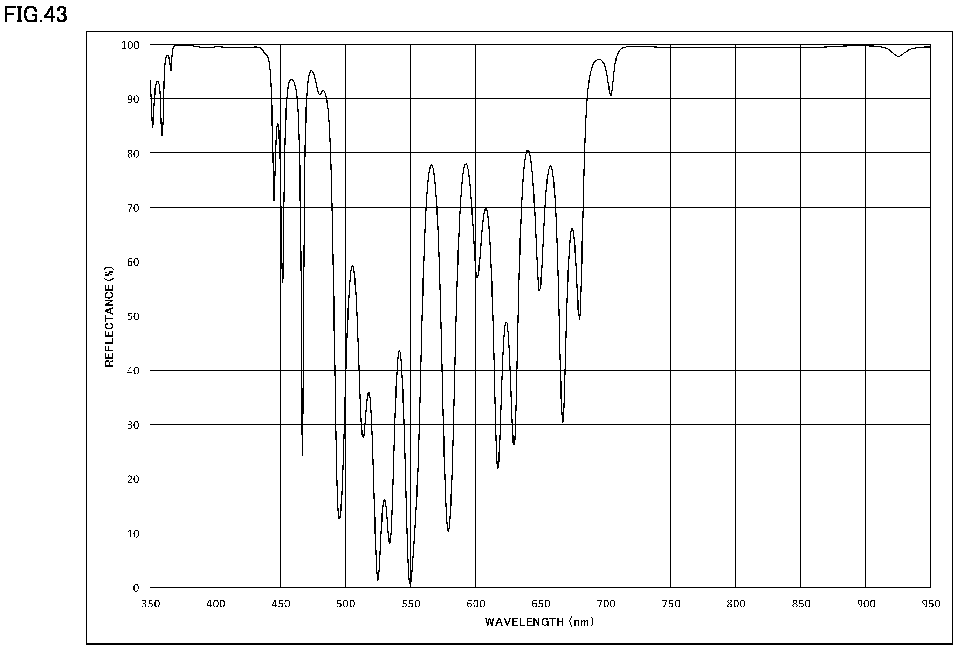

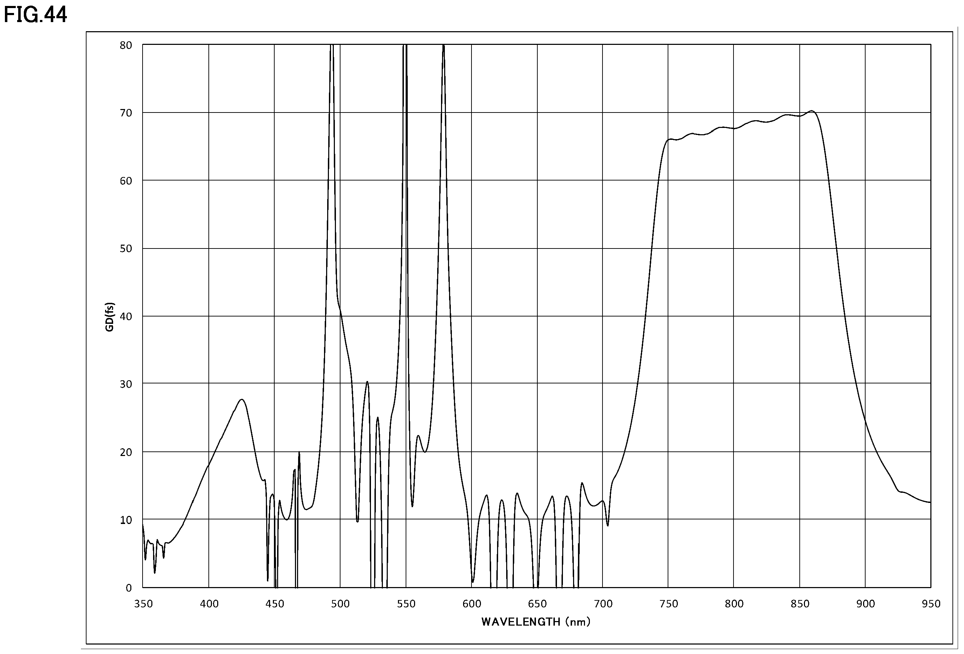

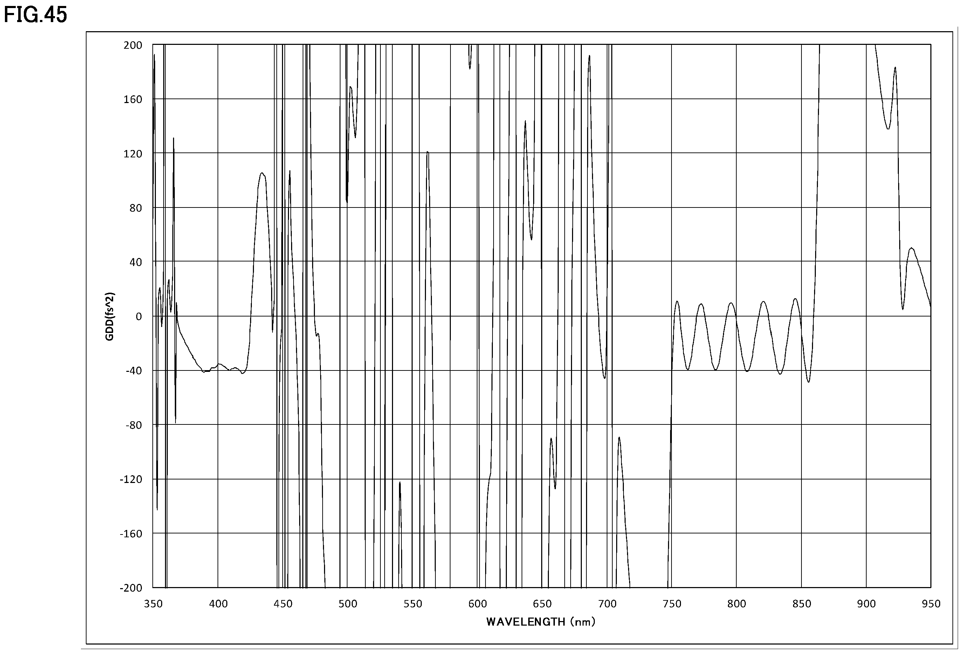

FIG. 42 to FIG. 45 are diagrams similar to FIG. 4 to FIG. 7, according to Example 10. It is noted that FIG. 43 to FIG. 45 are those obtained at an incidence angle of 5°, and the shown wavelength region is not less than 350 nm to 950 nm.

The optical multilayer film 4 of Example 10 is an alternate film in which odd number layers are $Ta_2O_5$ and even number layers are $SiO_2$, as in other Examples. The center wavelengths of Example 10 are 400 nm and 800 nm, as in Examples 1-1 to 5 and 7 to 9.

The total number of layers of the optical multilayer film 4 of Example 10 is 72.

Similar to Examples 7 to 9, in Example 10, delay and dispersion compensation are performed.

Example 10 exhibits high reflection in a wavelength region (400 nm band) of not less than 365 nm and not greater than 430 nm, and in the wavelength region (800 nm band) of not less than 715 nm.

While the group delay GD of Example 10 is about 18 fs in the 400 nm band, the group delay GD is about 68 fs in the 800 nm band, and the difference of the latter relative to the former is about 50 fs. In Example 10, through ten times of reflection of each optical pulse, the 800 nm optical pulse is delayed by about $50\times10=$about 500 fs with respect to the 400 nm optical pulse.

The group delay dispersion GDD of Example 10 is about -40 $fs^2$ in the 400 nm band, and is about -15 $fs^2$ in the 800 nm band. Example 10 has negative dispersions, suitable for dispersion compensation, in the 400 nm band and the 800 nm band, respectively, in ten times of reflection.

The pair of Examples 10 is configured such that: as a result of a total ten times of reflection of each optical pulse, the fundamental wave FW and the second harmonic SW in which chirps have occurred are subjected to dispersion compensation; and further, the fundamental wave FW is delayed by about 500 fs with respect to the second harmonic SW. In Example 10, with respect to the fundamental wave FW and the second harmonic SW, a time difference and dispersion compensation can be provided in a coaxial manner through reflection along the same optical path.

[Summary, etc., of Examples 1 to 10]

The delay mirrors 1 according to these Examples delay a first optical pulse having a first wavelength band, by a predetermined delay time, with respect to a second optical pulse having a the second wavelength band, through reflection of these optical pulses at the optical multilayer films 4. The first optical pulse and the second optical pulse may be coaxial.

Further, the delay mirrors 1 of Examples 1-1 to 6 do not change (low dispersion) the shapes of the first optical pulse and the second optical pulse.

That is, each of the delay mirrors 1 of Examples 1-1 to 6 includes the base 2, and the optical multilayer film 4 formed on the surface R of the base 2. The value of the group delay GD in a first wavelength band (800 nm band; 400 nm band in Example 4; 1030 nm band in Example 6) according to the optical multilayer film 4 is different from the value of the group delay GD in a second wavelength band (400 nm band; 800 nm band in Example 4; 515 nm band in Example 6) according to the optical multilayer film 4. In addition, the value of the group delay dispersion GDD in the first wavelength band according to the optical multilayer film 4 and the value of the group delay dispersion GDD in the second wavelength band according to the optical multilayer film 4 are each not less than -100 $fs^2$ and not greater than 100 $fs^2$. Therefore, each of Examples 1-1 to 6 provides a delay mirror 1: that provides a time difference without substantially changing the shapes of a plurality of optical pulses of which the pulse widths are each not less than about 40 fs; that can process the plurality of optical pulses in a coaxial manner; that is simple; and of which installation and fine adjustment are easy.

On the other hand, each of the delay mirrors 1 of Examples 7 to 10 restores (dispersion compensation) the shapes of the first optical pulse and the second optical pulse to those before chirps. In terms of the design target for the delay mirrors 1 of Examples 7 to 10, in the case of the first optical pulse (800 nm wavelength band), GD>0 and GDD<0, and in the case of the second optical pulse (400 nm wavelength band), GD=0 and GDD<0.

That is, each of the delay mirrors 1 of Examples 7 to 10 includes the base 2, and the optical multilayer film 4 formed on the surface R of the base 2. The value of the group delay GD in a first wavelength band (800 nm wavelength band) according to the optical multilayer film 4 is different from the value of the group delay GD in a second wavelength band (400 nm wavelength band) according to the optical multilayer film 4. In addition, the value of the group delay dispersion GDD in the first wavelength band according to the optical multilayer film 4 and the value of the group delay dispersion GDD in the second wavelength band according to the optical multilayer film 4 are each a negative value. Therefore, each of Examples 7 to 10 provides a delay mirror 1: that causes the shapes of a plurality of optical pulses to be close to the original shapes through negative dispersion and provides a time difference; that can process the plurality of optical pulses in a coaxial manner; that is simple; and of which installation and fine adjustment are easy.

Further, in the delay mirrors 1 of Examples 7 to 10, the value of the group delay dispersion GDD in the first wavelength band is a value that realizes dispersion compensation of an 800 nm band optical pulse according to the first wavelength band through a predetermined number of times (ten times) of reflection, and the value of the group delay dispersion GDD in the second wavelength band is a value that realizes dispersion compensation of a 400 nm band optical pulse according to the second wavelength band through the predetermined number of times of reflection. Therefore, delay mirrors 1 that each cause the shapes of a plurality of optical pulses to be the original shapes through dispersion compensation and provide a time difference; that can process the plurality of optical pulses in a coaxial manner; that are each simple; and of which installation and fine adjustment are easy, are provided.

Further, in the delay mirror 1 of each of Examples 7 to 10, the fundamental wave FW and the second harmonic SW are those having passed through the nonlinear optical crystal BBO. Therefore, with respect to the titanium sapphire laser light source TS which allows generation of the second harmonic SW (400 nm band) due to passing of the fundamental wave FW (800 nm band) through the nonlinear optical crystal BBO, the delay mirror 1, suitable for the titanium sapphire laser light source TS, that restores the shapes of the fundamental wave FW and the second harmonic SW to those before the passing through the nonlinear optical crystal BBO, and that delays the fundamental wave FW with respect to the second harmonic SW, is provided.

It is noted that, in the delay mirror 1 of the present invention, the group delay dispersion GDD may not necessarily be not less than -100 $fs^2$ and not greater than 100 $fs^2$ in each of the first wavelength band and the second wavelength band, unlike Examples 1-1 to 6.

Similarly, in the delay mirror 1 of the present invention, different from Examples 7 to 10 in which the group delay dispersion GDD has a negative value in each of the first wavelength band and the second wavelength band, the group delay dispersion GDD may be a positive value in each of the first wavelength band and the second wavelength band, or alternatively, one of the group delay dispersion GDD in the first wavelength band and the group delay dispersion GDD in the second wavelength band may be a positive value, and the other may be a negative value.

When the group delay GDs are different between the first wavelength band and the second wavelength band, a delay mirror of the optical multilayer film 4 type according to the first wavelength band and the second wavelength band is provided. The group delay dispersion GDD according to the first wavelength band and the second wavelength band are selected as appropriate in accordance with the object (e.g., the kind of function to be added to a delay function; keeping of optical pulse shape, dispersion compensation, and the like).

[Example 11]

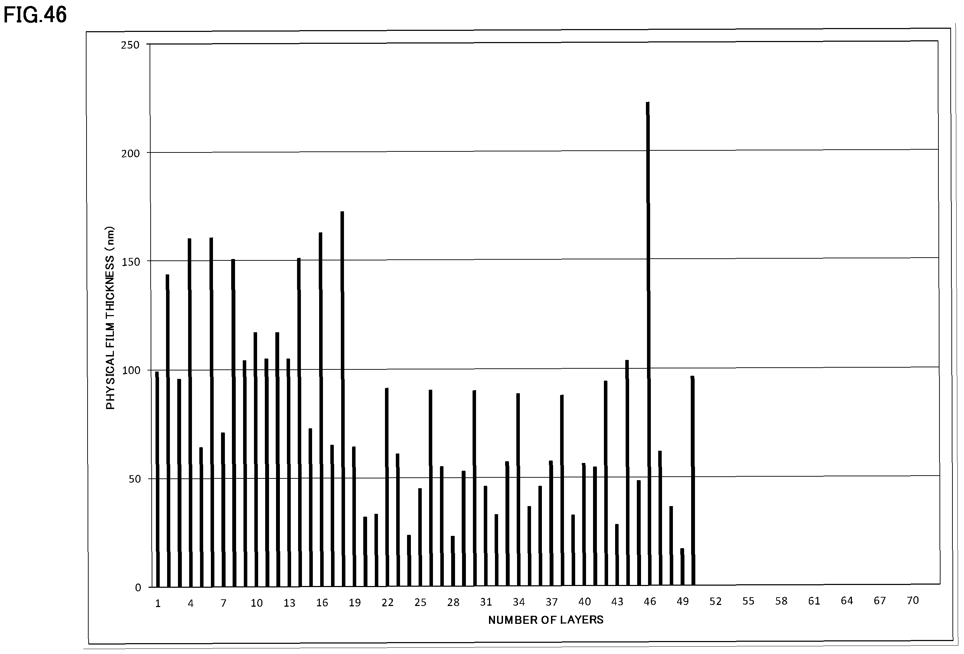

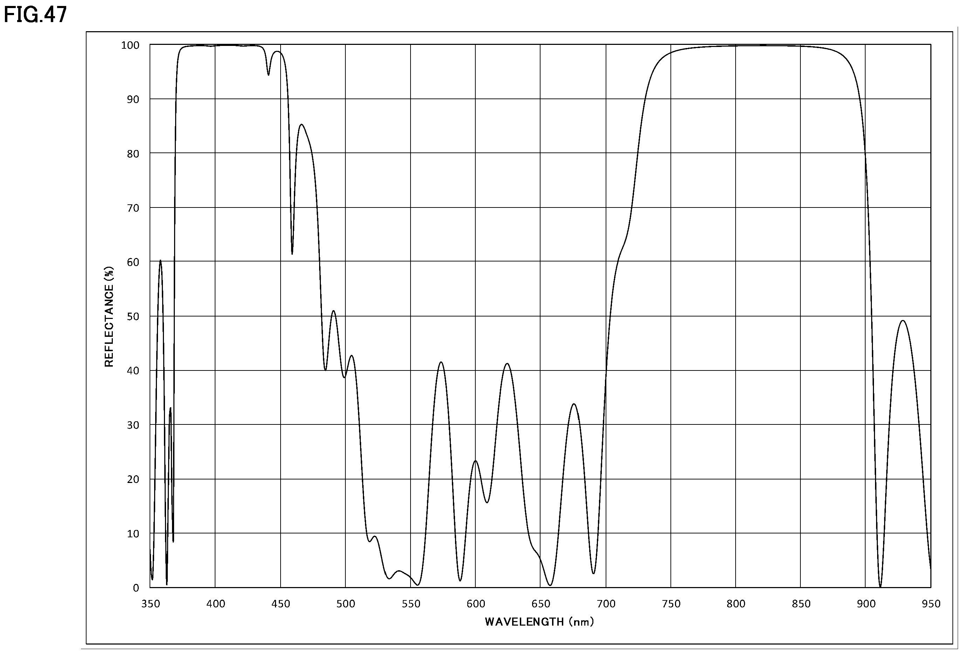

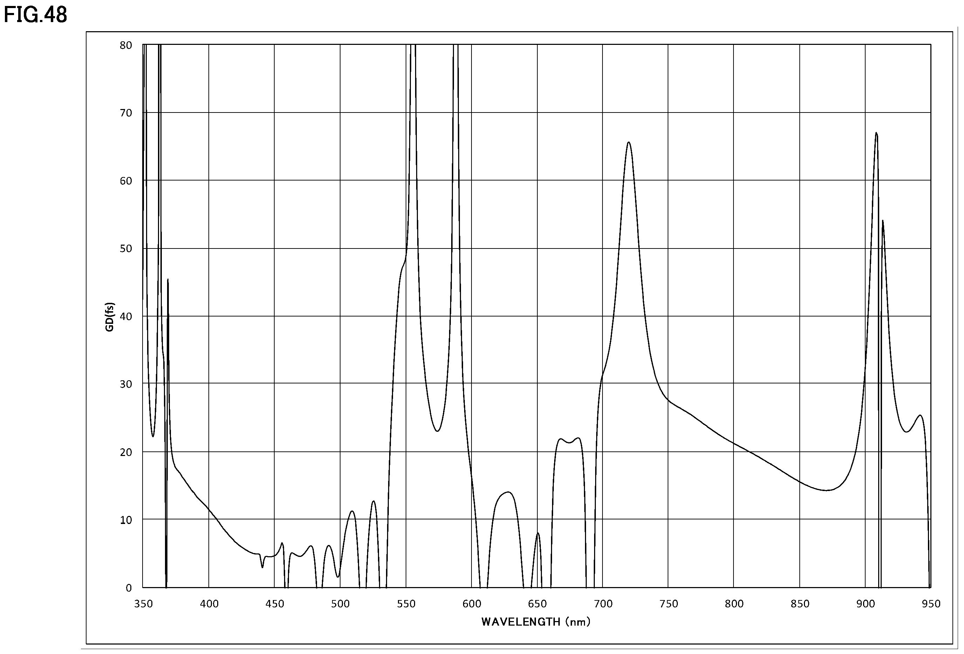

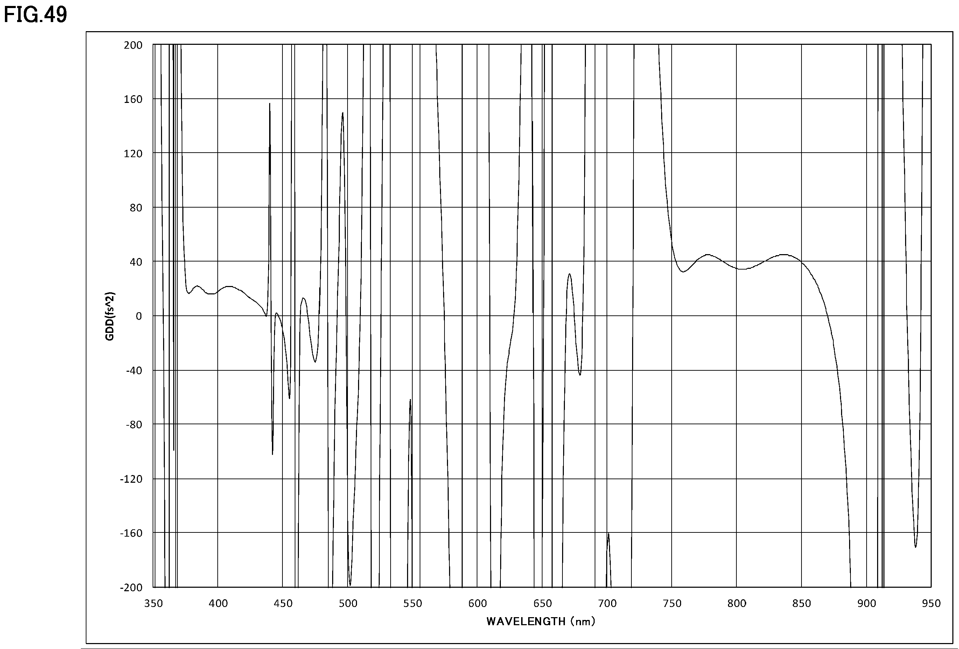

FIG. 46 to FIG. 49 are diagrams similar to FIG. 4 to FIG. 7, according to Example 11. It is noted that FIG. 47 to FIG. 49 are those obtained at an incidence angle of 5°, and the shown wavelength region is not less than 350 nm to 950 nm.

The optical multilayer film 4 of Example 11 is an alternate film in which odd number layers are $Ta_2O_5$ and even number layers are $SiO_2$, as in other Examples. The center wavelengths of Example 11 are 400 nm and 800 nm, as in Examples 1-1 to 5 and 7 to 10. The total number of layers of the optical multilayer film 4 of Example 11 is 50.

In Example 11, the group delays GD are different between the 400 nm band and the 800 nm band, and the group delay dispersion GDD is a positive value in each of the 400 nm band and the 800 nm band.

Example 11 exhibits high reflection in a wavelength region (400 nm band) of not less than 370 nm and not greater than 430 nm, and in a wavelength region (800 nm band) of not less than 750 nm and not greater than 860 nm.

While the group delay GD of Example 11 is about 12 fs in the 400 nm band, the group delay GD is about 21 fs in the 800 nm band, and the difference of the latter relative to the former is about 9 fs. In Example 11, through a single time of reflection of each optical pulse, the 800 nm optical pulse is delayed by about 9 fs with respect to the 400 nm optical pulse.

The group delay dispersion GDD of Example 11 is about 20 $fs^2$ (positive) in the 400 nm band, and is about 40 $fs^2$ (positive) in the 800 nm band.

In Example 11, through reflection of each optical pulse, the 800 nm band optical pulse is delayed by about 9 fs with respect to the 400 nm band optical pulse. In Example 11, with respect to the 800 nm band optical pulse and the 400 nm band optical pulse, a time difference can be provided in a coaxial manner through reflection along the same optical path.

[Example 12]

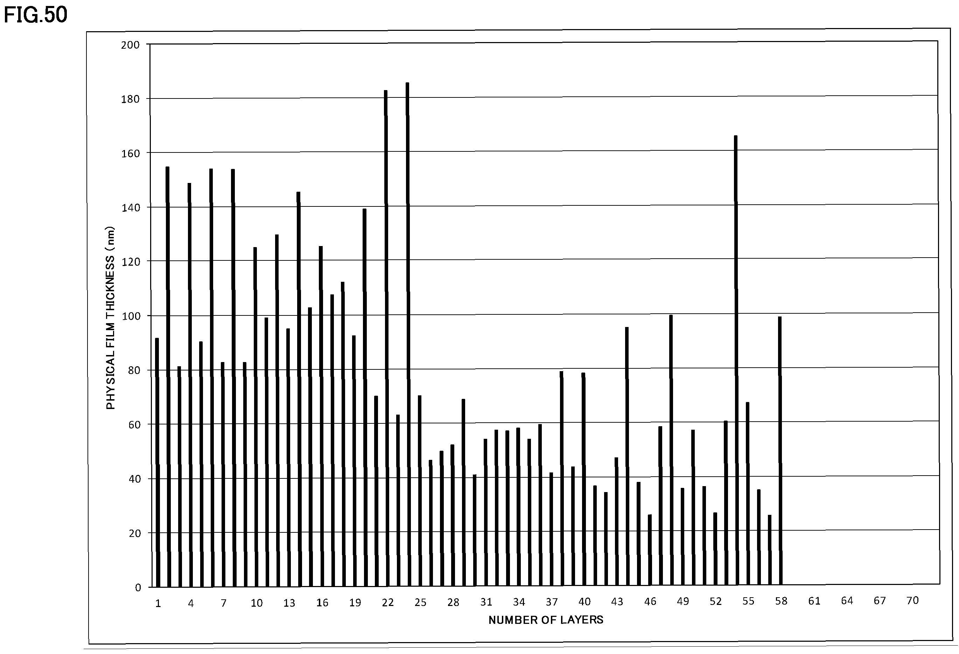

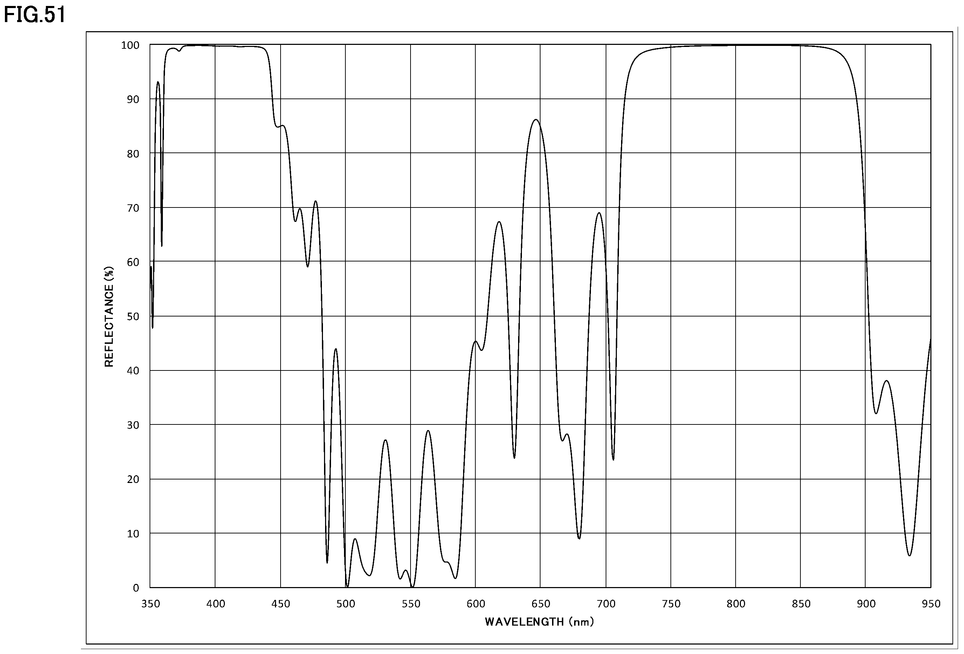

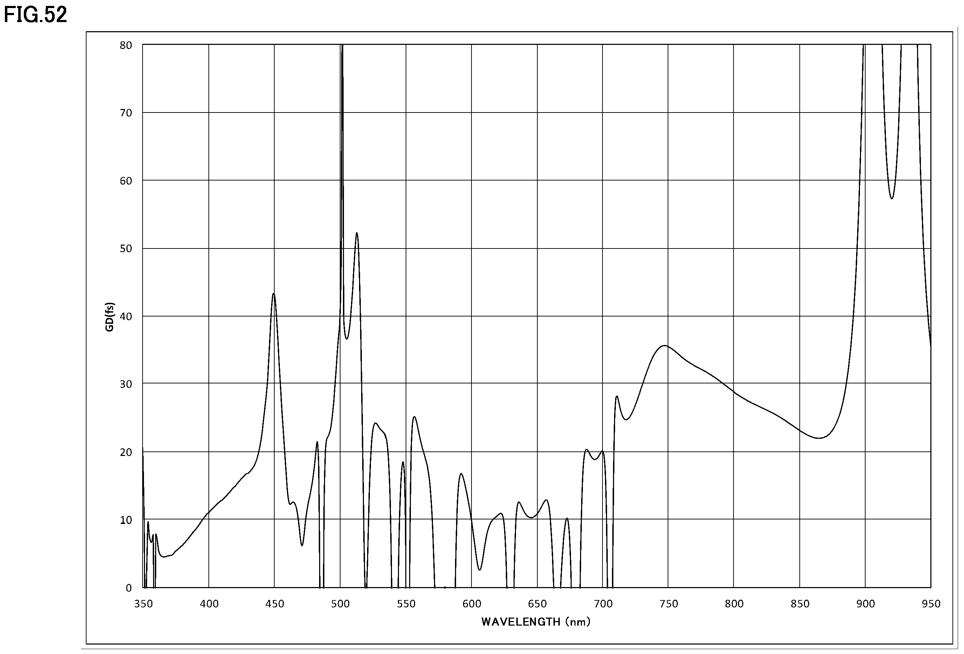

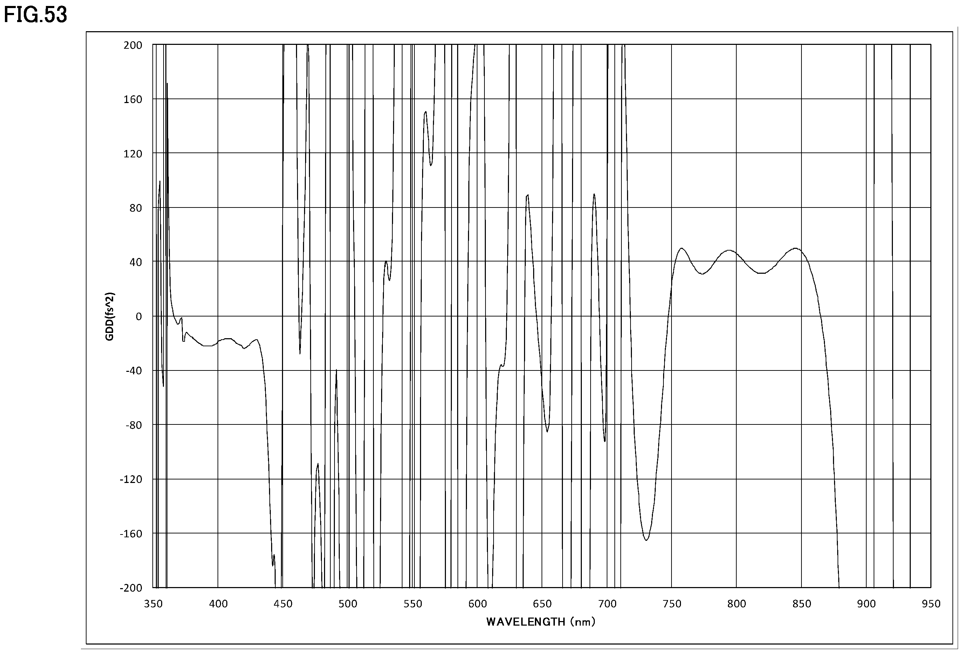

FIG. 50 to FIG. 53 are diagrams similar to FIG. 4 to FIG. 7, according to Example 12. It is noted that FIG. 51 to FIG. 53 are those obtained at an incidence angle of 5°, and the shown wavelength region is not less than 350 nm to 950 nm.

The optical multilayer film 4 of Example 12 is an alternate film in which odd number layers are $Ta_2O_5$ and even number layers are $SiO_2$, as in other Examples. The center wavelengths of Example 12 are 400 nm and 800 nm, as in Examples 1-1 to 5 and 7 to 11.

The total number of layers of the optical multilayer film 4 of Example 12 is 58.

In Example 12, the group delays GD are different between a 400 nm band and an 800 nm band. While the group delay dispersion GDD is a negative value in the 400 nm band, the group delay dispersion GDD is a positive value in the 800 nm band.

Example 12 exhibits high reflection in a wavelength region (400 nm band) of not less than 375 nm and not greater than 440 nm, and in a wavelength region (800 nm band) of not less than 740 nm and not greater than 860 nm.

While the group delay GD of Example 12 is about 11 fs in the 400 nm band, the group delay GD is about 29 fs in the 800 nm band, and the difference of the latter relative to the former is about 18 fs. In Example 12, through a single time of reflection of each optical pulse, the 800 nm optical pulse is delayed by about 18 fs with respect to the 400 nm optical pulse.

The group delay dispersion GDD of Example 12 is about -20 $fs^2$ (negative) in the 400 nm band and about 40 $fs^2$ (positive) in the 800 nm band.

In Example 12, through reflection of each optical pulse, the 800 nm band optical pulse is delayed by about 18 fs with respect to the 400 nm band optical pulse. In Example 12, with respect to the 800 nm band optical pulse and the 400 nm band optical pulse, a time difference can be provided in a coaxial manner through reflection along the same optical path.

[Example 13]

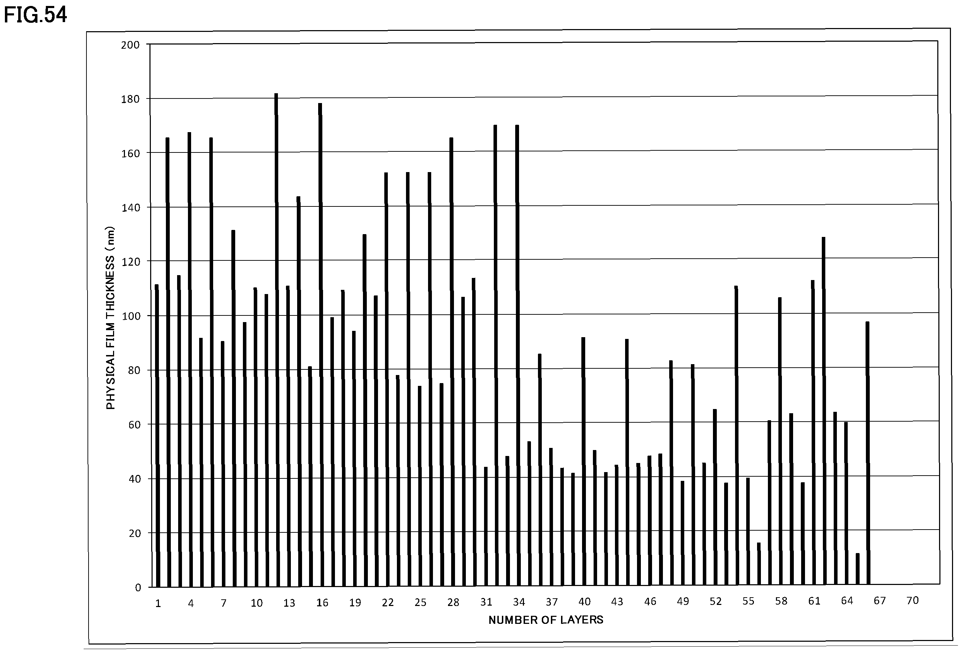

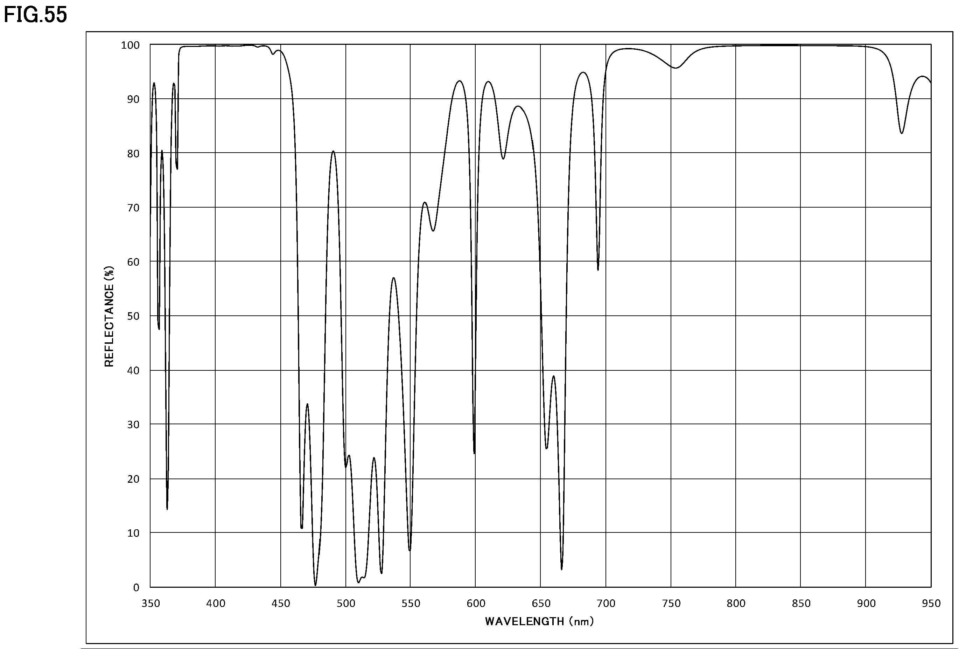

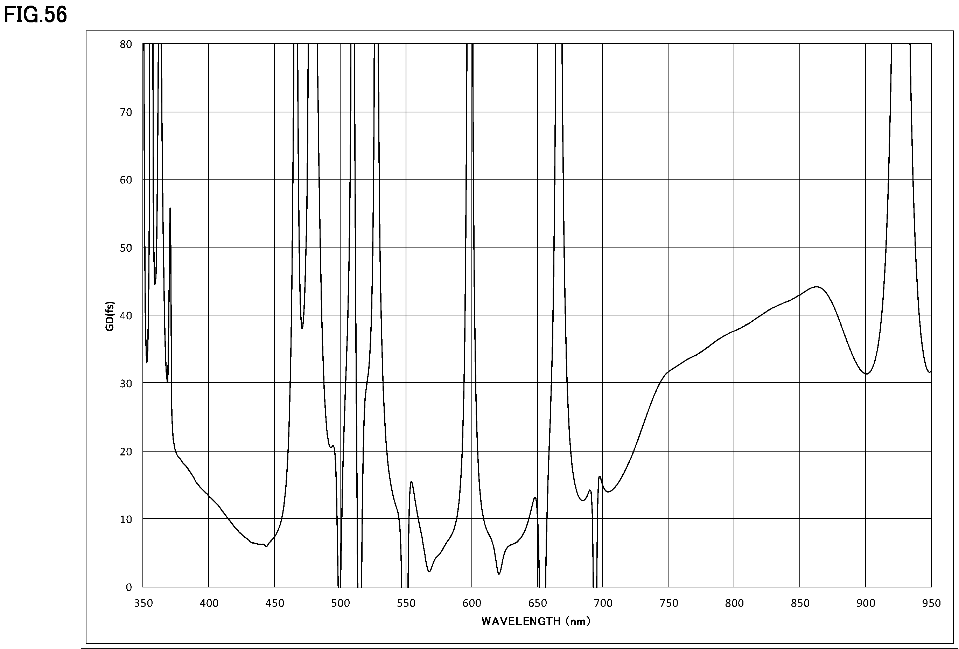

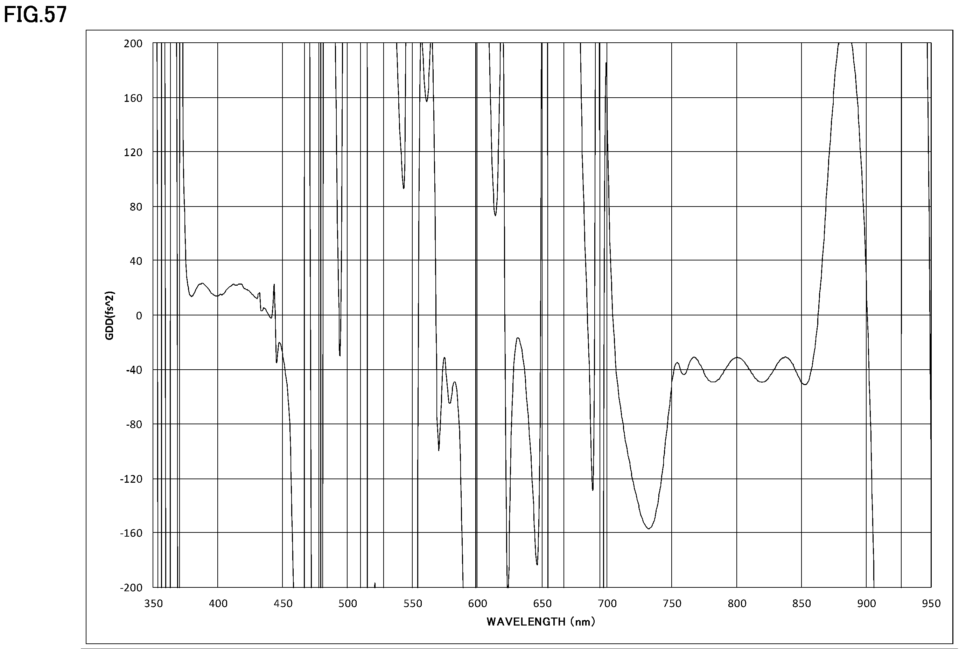

FIG. 54 to FIG. 57 are diagrams similar to FIG. 4 to FIG. 7, according to Example 13. It is noted that FIG. 55 to FIG. 57 are those obtained at an incidence angle of 5°, and the shown wavelength region is not less than 350 nm to 950 nm.

The optical multilayer film 4 of Example 13 is an alternate film in which odd number layers are $Ta_2O_5$ and even number layers are $SiO_2$, as in other Examples. The center wavelengths of Example 13 are 400 nm and 800 nm, as in Examples 1-1 to 5 and 7 to 12. The total number of layers of the optical multilayer film 4 of Example 13 is 66.

In Example 13, the group delays GD are different between a 400 nm band and an 800 nm band. While the group delay dispersion GDD is a positive value in the 400 nm band, the group delay dispersion GDD is a negative value in the 800 nm band.

Example 13 exhibits high reflection in a wavelength region (400 nm band) of not less than 370 nm and not greater than 440 nm, and in a wavelength region (800 nm band) of not less than 770 nm and not greater than 900 nm.

While the group delay GD of Example 13 is about 14 fs in the 400 nm band, the group delay GD is about 38 fs in the 800 nm band, and the difference of the latter relative to the former is about 24 fs. In Example 13, through a single time of reflection of each optical pulse, the 800 nm optical pulse is delayed by about 24 fs with respect to the 400 nm optical pulse.

The group delay dispersion GDD of Example 13 is about 20 $fs^2$ (positive) in the 400 nm band, and is about -40 $fs^2$ (negative) in the 800 nm band.

In Example 13, through reflection of each optical pulse, the 800 nm band optical pulse is delayed by about 24 fs with respect to the 400 nm band optical pulse. In Example 13, with respect to the 800 nm band optical pulse and the 400 nm band optical pulse, a time difference can be provided in a coaxial manner through reflection along the same optical path.

DESCRIPTION OF THE REFERENCE CHARACTERS

| | |
|---|---|
| 1 | delay mirror |
| 2 | base |
| 4 | optical multilayer film |
| 11 | delay mirror system |
| 12 | movement mechanism (delay mirror movement mechanism) |
| BBO | nonlinear optical crystal |
| R | surface |

**Claims**

1. A delay mirror comprising:

   a base; and
   an optical multilayer film formed on a surface of the base, wherein
   a value of a group delay GD in a first wavelength band according to the optical multilayer film is different from a value of the group delay GD in a second wavelength band according to the optical multilayer film.

2. The delay mirror according to claim 1, wherein a value of a group delay dispersion GDD in the first wavelength band according to the optical multilayer film and a value of the group delay dispersion GDD in the second wavelength band according to the optical multilayer film are each not less than -100 $fs^2$ and not greater than 100 $fs^2$.

3. The delay mirror according to claim 1, wherein
a value of a group delay dispersion GDD in the first wavelength band according to the optical multilayer film and a value of the group delay dispersion GDD in the second wavelength band according to the optical multilayer film are each a negative value.

4. The delay mirror according to claim 3, wherein

the value of the group delay dispersion GDD in the first wavelength band is a value that realizes dispersion compensation of a first optical pulse according to the first wavelength band through a predetermined number of times of reflection, and
the value of the group delay dispersion GDD in the second wavelength band is a value that realizes dispersion compensation of a second optical pulse according to the second wavelength band through a predetermined number of times of reflection.

5. The delay mirror according to claim 4, wherein
the first optical pulse and the second optical pulse are those having passed through a nonlinear optical crystal.

6. The delay mirror according to claim 1, wherein
a value of a group delay dispersion GDD in the first wavelength band according to the optical multilayer film and a value of a group delay dispersion GDD in the second wavelength band according to the optical multilayer film are each a positive value.

7. The delay mirror according to claim 1, wherein
out of a value of a group delay dispersion GDD in the first wavelength band according to the optical multilayer film and a value of a group delay dispersion GDD in the second wavelength band according to the optical multilayer film, one is a positive value and another is a negative value.

8. The delay mirror according to any one of claims 1 to 7, wherein
out of the first wavelength band and the second wavelength band, one is a 400 nm band and another is an 800 nm band.

9. The delay mirror according to any one of claims 1 to 7, wherein
out of the first wavelength band and the second wavelength band, one is a 515 nm band and another is a 1030 nm band.

10. A delay mirror system comprising:

the delay mirror according to any one of claims 1 to 9; and
a delay mirror movement mechanism configured to move the delay mirror with respect to another mirror such that a number of times of reflection at the delay mirror is changed.

11. The delay mirror system according to claim 10, comprising
a pair of the delay mirrors.

FIG.1

FIG.2

FIG.3

FIG.4

FIG.5

FIG.6

FIG.7

FIG.8

EP 4 102 271 A1

FIG.9

FIG.10

# FIG.11

FIG.12

FIG.13

FIG.14

FIG.15

FIG.16

FIG.17

FIG.18

FIG.19

FIG.20

FIG.21

FIG.22

**FIG.23**

FIG.24

FIG.25

FIG.26

EP 4 102 271 A1

FIG.27

EP 4 102 271 A1

FIG.28

FIG.29

FIG.30

FIG.31

FIG.32

EP 4 102 271 A1

FIG.33

FIG.34

FIG.35

FIG.36

**FIG.37**

GDD(fs^2) vs WAVELENGTH (nm)

**FIG.38**

FIG.39

FIG.40

FIG.41

FIG.42

FIG.43

EP 4 102 271 A1

FIG.44

FIG.45

FIG.46

FIG.47

FIG.48

WAVELENGTH (nm)

GD(fs)

FIG.49

FIG.50

FIG.51

FIG.52

FIG.53

FIG.54

FIG.55

REFLECTANCE (%)

WAVELENGTH (nm)

73

# FIG.56

EP 4 102 271 A1

FIG.57

**INTERNATIONAL SEARCH REPORT**

| | International application No. |
|---|---|
| | PCT/JP2021/007754 |

**A. CLASSIFICATION OF SUBJECT MATTER**
Int.Cl. G02B5/28(2006.01)i, G02B5/26(2006.01)i
FI: G02B5/28, G02B5/26

According to International Patent Classification (IPC) or to both national classification and IPC

**B. FIELDS SEARCHED**

Minimum documentation searched (classification system followed by classification symbols)
Int.Cl. G02B5/28, G02B5/26

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
Scopus

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2015-156487 A (DEUTSCHES ELEKTRONEN SYNCHROTRON DESY) 27 August 2015 (2015-08-27), claims 1-5, paragraphs [0020], [0024]-[0026], [0034]-[0036], fig. 2, 3 | 1-4, 6-9, 11<br>5, 10 |
| X<br>A | WO 2001/094991 A1 (OYOKODEN LAB CO., LTD.) 13 December 2001 (2001-12-13), pages 19-21, 27, 33-35, fig. 1-5, 7 | 1-4, 6-7, 10-11<br>5, 8-9 |
| X<br>A | JP 2000-221555 A (HAMAMATSU PHOTONICS KK) 11 August 2000 (2000-08-11), paragraphs [0012]-[0056], fig. 1-18 | 1-4, 6-7, 11<br>5, 8-10 |

☒ Further documents are listed in the continuation of Box C.     ☒ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 23 April 2021 | 11 May 2021 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**

| International application No. |
| --- |
| PCT/JP2021/007754 |

C (Continuation).　DOCUMENTS CONSIDERED TO BE RELEVANT

| Category* | Citation of document, with indication, where appropriate, of the relevant passages | Relevant to claim No. |
| --- | --- | --- |
| X<br>A | JP 2008-507143 A (FEMTOLASERS PRODUKTIONS GMBH) 06 March 2008 (2008-03-06), claims 1-20, paragraphs [0022]-[0031], fig. 2 | 1-5, 11<br>6-10 |
| X<br>A | JP 2002-528906 A (COHERENT, INC.) 03 September 2002 (2002-09-03), paragraphs [0009]-[0014], [0030]-[0038], fig. 7-10 | 1-4, 6-7<br>5, 8-11 |
| A | JP 2019-020650 A (TOKAI OPTICAL CO., LTD.) 07 February 2019 (2019-02-07), entire text, all drawings | 1-11 |

Form PCT/ISA/210 (second sheet) (January 2015)

**INTERNATIONAL SEARCH REPORT**
Information on patent family members

International application No.

PCT/JP2021/007754

| | | |
|---|---|---|
| JP 2015-156487 A | 27 August 2015 | EP 2908159 A1<br>claims, paragraphs [0019],<br>[0022]-[0024],<br>[0032]-[0034], fig. 2, 3<br>US 2015/0229093 A1 |
| WO 2001/094991 A1 | 13 December 2001 | US 2002/0060865 A1<br>paragraphs [0096]-[0101],<br>[0123], [0124],<br>[0146]-[0149], fig. 1-5, 7<br>US 2005/0100274 A1<br>JP 2005-236336 A<br>WO 2002/031542 A1<br>AU 6422601 A |
| JP 2000-221555 A | 11 August 2000 | (Family: none) |
| JP 2008-507143 A | 06 March 2008 | WO 2006/008135 A2<br>claims, paragraphs [0034]-[0044],<br>fig. 2<br>US 2008/0049301 A1<br>CA 2574111 A1<br>CN 1989665 A |
| JP 2002-528906 A | 03 September 2002 | US 6081379 A<br>column 2, line 49 to column 3,<br>line 42, column 7, line 16 to<br>column 8, line 53,<br>fig. 7-10<br>WO 2000/025154 A1 |
| JP 2019-020650 A | 07 February 2019 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008102352 A

**Non-patent literature cited in the description**

- Observation of N2 molecule Rydberg wave packet by extreme ultraviolet ultrafast photoelectron spectroscopy. **YUTO TOIDA.** thesis for master's degree, graduate school. Nagoya University, March 2014

- **N. ISHII et al.** Sub-two-cycle, carrier-envelope phase-stable, intense optical pulses at 1.6 $\mu$m from a BiB3O6 optical parametric chirped-pulse amplifier. *OPTICS LETTERS,* 15 October 2012, vol. 37 (20), 4182-4184